# EUROPÄISCHE PATENTSCHRIFT

(11) **EP 3 636 870 B1**
(45) Veröffentlichungstag und Bekanntmachung des Hinweises auf die Patenterteilung: **08.12.2021**
(21) Anmeldenummer: 19202030.3
(22) Anmeldetag: 08.10.2019
(51) Int. Cl.: E06B 3/263, B29C 65/08

(54) **VERFAHREN ZUR HERSTELLUNG EINES ISOLIERPROFILS**
METHOD FOR PRODUCING AN INSULATING PROFILE
PROCÉDÉ DE FABRICATION D'UN PROFILÉ ISOLANT

(30) Priorität: 08.10.2018 DE 102018124779
(43) Veröffentlichungstag der Anmeldung: 15.04.2020
(73) Patentinhaber: Ensinger GmbH, 71154 Nufringen (DE)
(72) Erfinder: KARL, Christoph, 93413 Cham (DE); WEISSTHANNER, Willi, 93473 Arnschwang (DE); MÖLLER, Michael, 93413 Cham (DE)
(74) Vertreter: Hoeger, Stellrecht & Partner Patentanwälte mbB

(56) Entgegenhaltungen:
- EP-A1- 2 850 270
- US-A- 5 658 408

## Beschreibung

Die Erfindung betrifft ein Verfahren zur Herstellung eines Isolierprofils, insbesondere für die Herstellung von Fenster-, Türen- und Fassadenelementen, sowie die nach dem Verfahren hergestellten Isolierprofile. Das zu fertigende Isolierprofil umfasst einen aus einem ersten Polymerwerkstoff gefertigten Isoliersteg, welcher einen Profilkörper sowie ein erstes Funktionselement umfasst, welche sich beide in Längsrichtung des Isolierprofils erstrecken, wobei das erste Funktionselement in einem Kontaktbereich mit dem Isoliersteg stoffschlüssig verbunden ist.

Die eingangs genannten Isolierprofile werden insbesondere vielfältig bei der Herstellung von Metall-Kunststoff-Verbundprofilen eingesetzt, wobei die Isolierprofile der Wärme- und/oder Schalldämmung der Verbundprofile dienen und typischerweise zwei Metallprofile miteinander verbinden.

Die erfindungsgemäß hergestellten Isolierprofile finden ferner Verwendung als sogenannte Schikanen, die als Schwellen z.B. in Schiebesystemen großformatiger Fenster oder Türen fungieren. Schließlich eignen sich die erfindungsgemäßen Isolierprofile als Fassadenabstandhalter, die insbesondere verwendet werden, um benachbarte Glasscheiben oder sonstige Fassadenplatten bei Fassaden und Glasdachkonstruktionen zueinander auf Abstand zu halten und gegebenenfalls die dazwischen vorhandenen Spalte zu füllen.

Bisher werden die eingangs genannten Isolierprofile in der Regel nach speziellen geometrischen Vorgaben der Kunden gefertigt. Dazu werden in aufwändigen Verfahren hochpreisige Extrusionswerkzeuge angefertigt, mit welchen dann genau die Zielkonturen des vom Kunden vorgegebenen Isolierprofils produziert werden können.

Ein weiterer Nachteil dieses klassischen Verfahrens ist neben den hohen Werkzeugkosten die fehlende Flexibilität, um herstellerseitig auf bestimmte Änderungswünsche bezüglich Anpassungen der Verbundgeometrie reagieren zu können. So kann man z.B. nicht einfach die Ansichtsbreite des Metall-Kunststoff-Verbundes unter Beibehaltung des Isolierprofils erhöhen, ohne an Isolationswirkung zu verlieren.

Diesem Problem wird im Stand der Technik durch diverse Lösungsansätze begegnet.

Grundsätzlich ist zu beachten, dass derartige Isolierprofile sicherheitsrelevante Bauteile darstellen, die z.B. in Deutschland nach DIN EN 14024 eignungsgeprüft werden.

Es sind Isolierprofile bekannt, bei denen nachträglich Schaumkörper aufgebracht werden. Diese werden dabei entweder stoffschlüssig oder formschlüssig an dem Isolierprofil befestigt. Beispielsweise beschreibt die EP 1 347 141 A1 ein Isolierprofil, das mit Schaumleisten unterschiedlicher Höhe kombiniert wird.

Die DE 10 2010 064 034 A1 beschreibt ebenfalls Metall-Kunststoff-Verbundprofile, die unter Verwendung von nachträglich aufgebrachtem Schaummaterial in ihren Eigenschaften optimiert werden.

Im Markt gibt es weitere Lösungen, die sich aufgrund der Variantenvielfalt der möglichen Isolierschäume unterscheiden. An diese Schäume werden zum Teil hohe Anforderungen gestellt, insbesondere wenn die Schäume im Profilverbund den Prozessschritt des "Pulverlackierens" durchlaufen. Es gibt nur wenige Schaumtechnologien, welche die diversen chemischen Vorbehandlungsbäder und eine anschließende Temperaturbelastung beim Einbrennen beim Lackieren bis über 200 °C überstehen. Dabei sollen diese Schäume eine geringe Wärmeleitfähigkeit aufweisen, preisgünstig sowie umweltfreundlich bzw. recyclingfähig sein. Bis heute zeichnet sich kein System ab, welches alle diese Anforderungen erfüllt.

Eine andere Herangehensweise ist das Aufbringen von Funktionselementen in Form von Fahnen oder das nachträgliche Ausbilden von Hohlkammerstrukturen, z.B. durch polymere oder metallische Werkstoffe.

Aus der DE 296 21 419 U1 ist bekannt, dass man durch Aufclipsen eines U-förmigen Profils auf ein Basisprofil Isolierprofile variabel herstellen kann. Diese Isolierprofile können einfach angepasst werden, um den Profilverbund hinsichtlich der Isolationswirkung zu optimieren. Ein Nachteil dieses Verfahrens ist aber die Notwendigkeit sogenannter Befestigungsnasen auf dem Basisprofil für die Herstellung der Clipverbindung, wobei diese Nasen zudem die Befestigungsposition der zu bildenden Hohlkammer unveränderbar festlegen.

Die DE 195 28 498 A1 und die von dieser Druckschrift ausgehende DE 10 2012 009 838 A1 beschreiben eine Möglichkeit, Verbundprofile herzustellen, indem nachträglich auf ein Isolierprofil/Basisprofil Fahnen aufgebracht werden.

Die DE 195 28 498 A1 beschreibt hierfür angespritzte oder Co-extrudierte Fahnen, z.B. aus Polyamid- oder Polyesterwerkstoffen, sowie metallische Fahnen. Aus diesen Druckschriften lässt sich jedoch nicht ableiten, wie eine metallische Fahne dauerhaft fest angefügt werden kann, ohne die thermische Isolationswirkung und die mechanischen Eigenschaften - speziell die Querzugfestigkeit z.B. nach DIN EN 14024 - deutlich zu verschlechtern.

Die DE 10 2012 009 838 A1 (entspricht der WO 2013/170952 A1) beschreibt ein Isolierprofil mit einer Fahnenstruktur, die mehrere parallel verlaufende isolierte Hohlkammern aufweist, wobei die Fahne z.B. aus einem Kunststoff-Folienmaterial hergestellt werden kann.

In dem U.S.-Patent 5,658,408 A ist ein statisches Ultraschall-Schweißverfahren zur Verbindung von zwei aus Kunststoff hergestellten Bauteilen beschrieben.

Aufgrund der dünnen Wandstärken von Folienmaterialien in Kombination mit der beschriebenen Hohlkammerstruktur sind derartige Produkte im Brandfall gegenüber anderen Lösungen offensichtlich nachteilig. Das Aufbringen der Fahne erfolgt z.B. durch Kleben oder Schweißen. Freistehende dünne Kunststofffolien haben außerdem den Nachteil, dass sie leicht biegbar sind. Beim Transport und bei der Lagerung derartiger Produkte in einem Transportbehältnis ist es daher wahrscheinlich, dass Fahnen aus freistehenden Folien sich unter dem Eigengewicht der Profile anlegen, sich verbiegen und dauerhaft deformieren. Dieses Szenario stellt ein typisches Ausschusskriterium dar.

Ein Verbundprofil mit Isolierprofilen aus Kunststoff und mit verbrückender, wärmeisolierender metallischer Querfahne wird in DE 195 11 081 A1 beschrieben.

In der EP 2 527 580 A1 wird ein Verbundprofil beschrieben, bei dem die Funktion einer Querfahne durch ein separates Profil realisiert wird, das an einer der Metallschalen des Verbundprofils befestigt wird.

Eine Verlängerung von Fahnen bei Isolierprofilen durch Adapter findet sich z.B. in der EP 2 432 960 A1 beschrieben. Man erkennt jedoch allein aus den Querschnittsflächen der beschriebenen und gezeigten Profilgeometrien, dass diese Lösung nur unter hohem Materialeinsatz realisierbar ist.

Isolierprofile mit der Funktion als Abstandhalter für Fassadenelemente sind in großer Vielfalt beispielsweise aus der WO 2015/189348 A1 bekannt.

Verfahren zum Verschweißen von Endlos- bzw. Bahnmaterial mittels Ultraschall sind unter anderem in der Konsumgüterindustrie weit verbreitet und werden z.B. bei der Herstellung von Windeln, Folienbeuteln oder Blisterverpackungen eingesetzt. Dabei werden in der Regel Kunststofffolien mit geringer Dicke als sogenannte Fügepartner verwendet, welche dann mit Rollsonotroden oder (mitfahrenden) getakteten Sonotrodenstempeln in-line verschweißt werden. Diese Schweißverfahren sind aber nicht geeignet, um Kunststoffteile mit einer Dicke im Millimeterbereich, z.B. Isolierstege, mit hoher Ausbringungsgeschwindigkeit und hoher Maßhaltigkeit herzustellen. Problematisch ist bei den bekannten Ultraschall-Schweißverfahren vor allem der relativ geringe Energieeintrag von Rollsonotroden, bedingt durch die geringe effektive Kontaktfläche einer Sonotrode (diese ergibt sich aus dem Radius einer Sonotrodenrolle) oder die starke Deformation von Produkten an den Versatzstellen bei der Verwendung getakteter Stempelsonotroden.

Aufgabe der Erfindung ist es, ein Verfahren bereitzustellen, mit dem die Isolierprofile wirtschaftlich und an die Kunden-spezifischen Anforderungen an die Funktionalität des Isolierprofils einfach anpassbar hergestellt werden können.

Diese Aufgabe wird erfindungsgemäß von einem Verfahren gemäß Anspruch 1 gelöst.

Bei dem erfindungsgemäßen Verfahren zur Herstellung eines Isolierprofils werden in einem ersten Schritt sowohl der Profilkörper als auch das erste Funktionselement jeweils separat gefertigt und bereitgestellt, wobei dann in einem nachgelagerten zweiten Schritt der Profilkörper und das erste Funktionselement in Längsrichtung des zu bildenden Isolierstegs einer Ultraschall-Schweißvorrichtung zugeführt werden, in welcher der Profilkörper und das Funktionselement unter Ausbildung einer Schweißverbindung stoffschlüssig miteinander verbunden werden, wobei die Ultraschall-Schweißvorrichtung eine mit einer Sonotrode oder auch mehreren Sonotroden ausgerüstete Schweißzone umfasst. Die Sonotrode(n) weist/weisen eine Ausnehmung auf, in welcher das Funktionselement während der Ausbildung der Schweißverbindung geführt wird.

Der Profilkörper und das erste Funktionselement werden während der Ausbildung der Schweißverbindung zu einer vorgegebenen ersten Querschnittsgeometrie, senkrecht zur Längsrichtung gesehen, zusammengeführt und danach in der vorgegebenen ersten Querschnittsgeometrie oder gegebenenfalls in einer von der ersten Querschnittsgeometrie abweichenden zweiten vorgegebenen Querschnittsgeometrie, senkrecht zur Längsrichtung gesehen, geführt, bis das Kunststoffmaterial der Schweißverbindung soweit erstarrt ist, dass der Profilkörper und das erste Funktionselement in der vorgegebenen Querschnittsgeometrie fixiert sind.

Letzteres ist typischerweise der Fall, wenn die Polymerwerkstoffe im Bereich der Schweißverbindung auf eine Temperatur abgekühlt sind, die unterhalb von deren Kristallitschmelztemperatur bzw. deren Erweichungstemperatur liegt.

Die bei dem erfindungsgemäßen Ultraschall-Schweißen verwendete Ultraschallfrequenz liegt beispielsweise im Bereich von 20 kHz bis 40 kHz.

Der Profilkörper oder der Isoliersteg einerseits und das erste Funktionselement andererseits werden im Folgenden auch als Fügepartner bezeichnet.

Bei dem erfindungsgemäßen Verfahren können der Profilkörper und das erste Funktionselement kontinuierlich oder intermittierend der Ultraschall-Schweißvorrichtung zugeführt werden.

Dabei können der Profilkörper und/oder das erste Funktionselement als Endlosmaterial oder als Stangenware bereitgestellt werden.

Unter jedem der beiden vorgenannten Aspekte ist schon eine große Flexibilität im Fertigungsablauf gewährleistet.

Erfindungsgemäß wird zunächst ein Isoliersteg mit einem (oder gegebenenfalls auch mehreren) Profilkörper(n) und optional einem an den Profilkörper angeformten Randabschnitt hergestellt, wobei mit dem Isoliersteg nachträglich ein oder mehrere erste Funktionselemente, z.B. in Form sogenannter Fahnen und/oder anderer Funktionsteile, stoffschlüssig verbunden werden. Die Funktionselemente werden häufig ebenfalls aus einem Polymerwerkstoff hergestellt.

Häufig wird der Isoliersteg mit zwei Randabschnitten ausgebildet, die senkrecht zur Längsrichtung des Isolierprofils gegenüberliegend an den Profilkörper angeformt sind.

Die stoffschlüssige Verbindung des Profilkörpers mit dem oder den ersten Funktionselement(en) kann in Längsrichtung des Isolierprofils fortlaufend, d.h. insbesondere kontinuierlich, oder auch in Abständen an mehreren aufeinander folgenden Positionen punktuell oder abschnittsweise erfolgen.

Der Isoliersteg kann darüber hinaus auch zwei oder mehr Profilkörper aufweisen, wobei in der Summe typischerweise mindestens ein Randabschnitt an einen der Profilkörper angeformt ist.

Die Wandstärke der Profilkörper der erfindungsgemäß hergestellten Isolierprofile beträgt häufig ca. 0,6 mm bis ca. 2,5 mm, bevorzugt ca. 0,7 mm bis ca. 2 mm. Sie kann aber in besonderen Einsatzfällen auch dicker sein.

Die ersten Funktionselemente erstecken sich vorzugsweise merklich von der Oberfläche des Profilkörpers oder des Randabschnitts (in senkrechter Richtung) weg, beispielsweise ca. 3 mm oder mehr.

Die ersten Funktionselemente weisen häufig Wandstärken im Bereich von ca. 0,6 mm bis ca. 2 mm oder auch mehr auf, je nach der dem ersten Funktionselement zugewiesenen Funktion.

Die Funktionen der ersten Funktionselemente sind insbesondere die Übertragung von Kräften, die Aufnahme von Dichtungselementen, beispielsweise Elastomerdichtungselementen, die Funktion einer sogenannten Fahne, d.h. eines Strukturelements zur Unterteilung von Hohlräumen zur Verminderung oder Unterdrückung von Konvektionsströmungen und anderem. Die Form der Funktionselemente kann dann u.a. die Form von Fahnen, Haken, Nasen, Nuten, T-förmigen Absprüngen oder Pfeilen beinhalten oder annehmen.

Bevorzugt sind die Funktionselemente dann aus einem Werkstoff, insbesondere einem Polymerwerkstoff, mit einem E-Modul von z.B. ca. 2000 MPa oder mehr, vorzugsweise ca. 3000 MPa oder mehr, und/oder einer Zugfestigkeit von ca. 40 MPa oder mehr gefertigt.

Die Verbindung der ersten Funktionselemente mit dem Isoliersteg kann direkt, gegebenenfalls an einem am Isoliersteg ausgebildeten Vorsprung, erfolgen.

Durch das erfindungsgemäße Verfahren lassen sich die Isolierprofile einerseits bezüglich der Losgrößen (auch kleine Losgrößen sind nun zu relativ geringen Kosten für den Kunden darstellbar) als auch bezüglich der eingesetzten Rohstoffe wirtschaftlich fertigen, andererseits muss die Rohstoffvielfalt im Produkt nicht unnötig erhöht werden. Hieraus ergeben sich Vorteile für den Kunden hinsichtlich der Wirtschaftlichkeit und der technischen Performance, und die Isolierprofile sind leicht zu verarbeiten und sicher in der Anwendung. Die Verarbeitung der Profile umfasst hierbei insbesondere
- das Transportieren und Lagern (z.B. lose oder gebündelt in einem Transportbehälter für Stangenware);
- das Schneiden, Sägen und Fräsen, z.B. um Profile abzulängen, anzuspitzen, zu durchlöchern oder für eine Anwendung passend zu konfektionieren;
- das Konditionieren, um Feuchtegehalte zu steuern oder bestimmte Lager- und Alterungszustände einzustellen;
- das Durchführen von Reinigungs- und Vorbehandlungsschritten, z.B. mit wässrigen Dispersionen, Lösungen oder Lösemitteln, oder Chemikalien, insbesondere zur Vorbereitung von Beschichtungsprozessen (Lackieren, Kleben, etc.);
- das Durchführen von Beschichtungen, insbesondere von Lackierungen, z.B. Pulverlack-Einbrennlackierungen, bei Temperaturen von bis zu 200 °C oder bis zu 220 °C; sowie
- das Aufbringen oder Anbringen von Schäumen oder geschäumten Materialien.

Dabei lassen sich insbesondere Isolierprofile mit einer hohen Maßhaltigkeit, d.h. geringen Toleranzen, und insbesondere einer hohen Parallelität der einzelnen Bestandteile des Isolierprofils herstellen. Dies erleichtert in erheblichem Maße die Verarbeitung der Isolierprofile zu Verbundprofilen.

Der Polymerwerkstoff des Isolierstegs ist vorzugsweise ein thermoplastischer oder ein schweißbar modifizierter duroplastischer Werkstoff (z.B. durch Verwendung von Polymerblends mit separaten thermoplastischen Domänen). Der Polymerwerkstoff kann neben einem oder mehreren Polymeren zusätzlich Verstärkungsstoffe, insbesondere Fasern, besonders bevorzugt in Form von Glasfasern, sonstige Füllstoffe, Additive, Farbstoffe etc. enthalten.

Die faserverstärkten Polymerwerkstoffe beinhalten bevorzugt Verstärkungsfasern mit einem Anteil von ca. 5 bis ca. 60 Gew.-%, weiter bevorzugt mit einem Anteil von ca. 20 bis ca. 50 Gew.-%. Dies gilt insbesondere für den Polymerwerkstoff des Profilkörpers des erfindungsgemäßen Isolierprofils.

Bevorzugt werden bei dem erfindungsgemäßen Verfahren der Profilkörper und das Funktionselement vor dem Durchlaufen der Schweißzone in einer Führungszone mittels einer ersten Führungsvorrichtung in einer vorgegebenen, gegebenenfalls veränderlichen Relativposition zueinander positioniert und in der Längsrichtung geführt.

Weiter bevorzugt werden erfindungsgemäß der Profilkörper und das Funktionselement nach dem Durchlaufen der Schweißzone mittels einer zweiten Führungsvorrichtung im Bereich einer Haltezone in einer vorgegebenen, gegebenenfalls veränderlichen Relativposition zueinander positioniert und in der Längsrichtung geführt.

Alternativ können der Profilkörper und das Funktionselement beim Durchlaufen der Schweißzone und optional auch beim Durchlaufen der zweiten Führungsvorrichtung im Anschluss an die Schweißzone mit der vorgegebenen Kraft gegeneinander gepresst werden.

Vorzugsweise wird das erste Funktionselement mit einem oder mehreren Abschmelzelementen gefertigt, welche(s) sich als Vorsprung von einer Oberfläche des Kontaktbereichs des ersten Funktionselements weg erstreckt/erstrecken, wobei sich der Vorsprung oder die Vorsprünge bevorzugt ca. 3 mm oder weniger, weiter bevorzugt ca. 1,5 mm oder weniger von der Oberfläche weg erstreckt/erstrecken. Vorteilhaft ist es, wenn sich der Vorsprung bzw. die Vorsprünge um ca. 0,2 mm oder mehr, bevorzugt ca. 0,4 mm oder mehr, von der Oberfläche weg erstreckt/erstrecken.

Gemäß einer Variante des erfindungsgemäßen Verfahrens werden der Profilkörper und das erste Funktionselement einander unter einem spitzen Winkel bezüglich der Längsrichtung zugeführt, wobei sich die Führung unter einem spitzen Winkel zumindest über Teilbereiche der Schweißzone und gegebenenfalls der ersten Führungsvorrichtung und/oder der zweiten Führungsvorrichtung erstreckt. Der Winkel wird wesentlich von der Höhe des Energierichtungsgebers h_{ERG} sowie von der Länge der Schweißzone beeinflusst und beträgt typischerweise ca. 5° oder weniger, bevorzugt ca. 3° oder weniger, insbesondere über die gesamte Länge der Schweißzone gemittelt.

Bevorzugt wird bei dem erfindungsgemäßen Verfahren das Ultraschallschweißen als Nahfeldschweißen durchgeführt, wobei die Sonotrode einen direkten Kontakt zum ersten Funktionselement aufweist und wobei vorzugsweise die Sonotrode mit einem maximalen Abstand von ca. 6 mm oder weniger zum Profilkörper angeordnet ist.

Bevorzugt weist die Schweißzone eine Länge von ca. 5 cm bis ca. 50 cm und gegebenenfalls mehr als eine Sonotrode auf.

Gemäß dem erfindungsgemäßen Verfahren kann/können in der Schweißzone die Sonotrode(n), bezogen auf die Längsrichtung zum Profilkörper, unterschiedliche Winkelpositionen einnehmen, wobei die Winkelpositionen kontinuierlich und/oder stufenweise variieren und der Abstand der Sonotrode(n) in Durchlaufrichtung vermindert wird. Die Winkelposition einer Sonotrode kann dabei fest einstellbar sein. Ebenso ist es aber möglich, eine automatisierte, dynamische Anpassung der Winkelposition umzusetzen, wobei die Winkelposition z.B. in Abhängigkeit der Vorschubgeschwindigkeit der Fügepartner variiert wird.

Bevorzugt umfasst die Schweißzone mindestens eine statische Sonotrode, wobei die statische Sonotrode insbesondere als Schleifsonotrode ausgebildet wird.

Weiterhin vorzugsweise wird das erste Funktionselement im Kontaktbereich mit einer oder zwei Schulter(n) ausgebildet, welche im Bereich der Schweißzone in Kontakt mit der oder den Sonotrode(n) steht/stehen. Die Schulter(n) wird/werden mit einer Kraft beaufschlagt, um das erste Funktionselement und den Isoliersteg in eine gewünschte Querschnittsgeometrie zu bringen oder in einer gewünschten Querschnittsgeometrie zu halten.

Typischerweise wird das Isolierprofil mit einer Geschwindigkeit von ca. 5 m/min oder mehr, bevorzugt von ca. 10 m/min oder mehr, in der Schweißzone in Längsrichtung gefördert. Bevorzugt sind Geschwindigkeiten im Bereich von ca. 10 bis ca. 60 m/min, insbesondere von ca. 15 bis ca. 40 m/min.

Bevorzugt beträgt die Verweildauer des Profilkörpers und des ersten Funktionselements in der Schweißzone ca. 100 bis ca. 1000 msec, weiter bevorzugt ca. 200 bis ca. 800 msec.

Gemäß dem erfindungsgemäßen Verfahren kann die Sonotrode kontinuierlich betrieben werden.

Bevorzugt wird die Ausnehmung der Sonotrode schlitz- oder spaltförmig ausgebildet, zumindest in dem Bereich, mit dem die Sonotrode an dem Kontaktbereich des ersten Funktionselements anliegt, insbesondere den am Kontaktbereich gegebenenfalls ausgebildeten Schultern. Insbesondere bevorzugt ist es, wenn die Sonotrode auf zwei gegenüberliegend am Funktionselement ausgebildeten Schultern aufliegt. Weiter ist es möglich, dass nur ein Teil einer Sonotrode auf einem Kontaktbereich oder einem Teil eines Kontaktbereichs des Funktionselements aufliegt.

Eine Sonotrode kann auch innenliegend größere Freiräume bzw. Ausbuchtungen aufweisen, um dadurch auch geometrisch anspruchsvollen Funktionszonen z.B. Haken, Pfeilen oder T-förmigen Vorsprüngen ausreichend Platz zu bieten.

Die Breite b eines Schlitzes oder Spalts beträgt häufig ca. 1 bis ca. 3 mm, sofern einfach gehaltene, gerade abstehende Funktionszonen wie z.B. Fahnen oder Nasen verschweißt werden. Die Ausnehmung, auch in Form eines Schlitzes oder Spalts, weist typischerweise eine Höhe h von einigen Zentimetern auf, z.B. ca. 1 cm oder mehr, bevorzugt ca. 1 cm bis ca. 20 cm. Das Aspektverhältnis h/b beträgt vorzugsweise 5 oder mehr. Im Falle, dass die Ausnehmung der Sonotrode, wie weiter oben schon angesprochen, von der Schlitz- oder Spaltform abweicht, wird die Breite b zur Berechnung des Aspektverhältnisses an der Stelle der Sonotrode gemessen, die benachbart zum Kontaktbereich des ersten Funktionselements ist.

Insbesondere wird das Funktionselement an dem mit dem Profilkörper zu verbindenden Kontaktbereich mit einem oder mehreren als Energierichtungsgeber ausgeformten Vorsprüngen ausgebildet, wobei die Vorsprünge insbesondere als Abschmelzelemente ausgebildet sind.

Weiter bevorzugt wird das Funktionselement benachbart zu dem oder den Vorsprüngen mit einem oder mehreren Anschlagselementen versehen, welche beim Zusammenführen von Funktionselement und Profilkörper die zu erzielende Querschnittsgeometrie definieren, wobei der Vorsprung oder die Vorsprünge vorzugsweise auch mit der Funktion als Schulter ausgebildet ist/sind.

Erfindungsgemäß kann die stoffschlüssige Verbindung zwischen dem oder den ersten Funktionselement(en) und dem Profilkörper entlang der Längsrichtung des Isolierprofils kontinuierlich, abschnittsweise oder punktuell erfolgen.

Bei einem besonders bevorzugten erfindungsgemäßen Verfahren werden neben dem Profilkörper auch die Funktionselemente als Endlosmaterial bereitgestellt, und nach der Herstellung der stoffschlüssigen Verbindung derselben wird das Isolierprofil auf eine vorgegebene Länge abgelängt, vorzugsweise durch einen Schneide- oder Stanz- oder Fräsprozess.

Die Endlosmaterialien werden bevorzugt auf Rollen, Spulen oder Haspeln bereitgestellt.

Alternativ können der Profilkörper und/oder die Funktionselemente vor der Herstellung der stoffschlüssigen Verbindung in Form von Stangenware bereitgestellt werden.

Die Erfindung betrifft ferner ein Isolierprofil, hergestellt nach einem Verfahren gemäß Anspruch 12, wobei der Profilkörper einen sich in Längsrichtung des Isolierprofils erstreckenden Bereich aufweist, der im Wesentlichen plan ausgebildet ist.

Das erfindungsgemäße Isolierprofil kann einen Profilkörper aufweisen, der in vorgegebenen, insbesondere regelmäßigen Abständen mit Durchgangsöffnungen versehen ist.

Häufig weist bei dem erfindungsgemäßen Isolierprofil der Isoliersteg mindestens einen Randabschnitt auf, welcher ein Verbindungselement umfasst, wobei das Verbindungselement insbesondere die Form eines Einrollkopfes zur Verbindung mit Metallprofilen aufweist.

Die mechanische Festigkeit der Verbindung der ersten Funktionselemente mit dem Profilkörper und/oder dem mindestens einen Randabschnitt soll ein einfaches und sicheres Handhaben der Isolierprofile während des Transports und der Verarbeitung zulassen. Ebenfalls soll die Verbindung ausreichend dauerhaft sein, um im Einsatzbereich des Produktes über den Lebenszyklus zu funktionieren; dies ist einem Fachmann geläufig.

Die Festigkeit kann z.B. durch einen Zugversuch gemessen werden, bei dem ein Basisprofil einer bestimmten Länge (ergibt die Bezugslänge der Festigkeit in [mm]) des Isolierprofils fixiert wird und an dem Funktionselement eine Normalkraft oder in bestimmten Fällen eine Tangentialkraft angelegt wird, die bis zum Teileversagen (Bruchkraft in [N]) gesteigert wird.

Bei bevorzugten erfindungsgemäßen Isolierprofilen weist die stoffschlüssige Schweißverbindung zwischen dem Profilkörper und dem ersten Funktionselement eine Festigkeit von ca. 2 N/mm oder mehr, bevorzugt ca. 5 N/mm oder mehr, besonders bevorzugt ca. 10 N/mm oder mehr auf.

Das erfindungsgemäße Isolierprofil kann einen Isoliersteg aufweisen, der integral mit dem Profilkörper ausgebildete zweite und gegebenenfalls weitere Funktionselemente umfasst.

Insbesondere kann/können bei einem erfindungsgemäßen Isolierprofil das oder die ersten Funktionselement(e) ausgewählt sein aus im Querschnitt planaren, gebogenen, insbesondere teilkreisförmigen, verzweigt oder abgewinkelt ausgebildeten Flächenelementen und/oder einen Hohlraum oder mehrere Hohlräume umschließenden Elementen, wobei das oder die Funktionselement(e) bevorzugt einen im Querschnitt zur Längsrichtung T-förmigen, pfeilförmigen oder hakenförmigen Abschnitt aufweist/aufweisen.

Ferner können bei dem erfindungsgemäßen Isolierprofil das oder die ersten Funktionselement(e) eine Vielzahl an, gegebenenfalls geschlossenen, Hohlräumen in Längsrichtung des Isolierprofils bilden, wobei die Hohlräume insbesondere aneinandergereiht ausgebildet sind.

Typischerweise sind bei dem erfindungsgemäßen Isolierprofil der Profilkörper und gegebenenfalls das oder die ersten Funktionselement(e) aus einem Polymermaterial hergestellt, welches bevorzugt auf einem thermoplastischen Polymer basiert, welches ausgewählt ist aus Polyamiden, Polyestern, Polyolefinen, Polyketonen, Vinylpolymeren, Polyether, Polycarbonat, Polyphenylensulfid oder Copolymeren oder Blends dieser Materialien.

Bevorzugt wird das Polymermaterial des oder der ersten Funktionselemente so ausgewählt, dass es mit dem Polymermaterial des Profilkörpers kompatibel ist.

Alternativ kann die Oberfläche und/oder ein Kern des oder der ersten Funktionselemente teilweise Metall-beschichtet oder metallisiert oder metallisch ausgerüstet sein.

Dadurch ist es möglich, z.B. IR-reflektierende Fahnen aus Metall (z.B. aus dünnem Aluminiumblech) auf einem Isoliersteg zu verankern, ohne dass es zu einer Beeinträchtigung der Isolationseigenschaften des Profilkörpers kommt.

Für bestimmte Anwendungen hat es sich als günstig erwiesen, wenn das Polymermaterial des Profilkörpers und/oder des ersten Funktionselements faserverstärkt, insbesondere Glasfaser-verstärkt, ist.

Der Randabschnitt oder die Randabschnitte kann/können in unterschiedlichen Konfigurationen zu dem Profilkörper angeordnet ausgebildet werden. Beispielsweise können sich diese im Wesentlichen parallel zu einer Ebene des Profilkörpers erstrecken oder auch gegenüber einer Ebene des Profilkörpers abgekröpft ausgebildet sein.

Bevorzugte erfindungsgemäße Isolierprofile gemäß einer ersten Variante weisen einen Profilkörper mit einem sich in Längsrichtung des Isolierprofils erstreckenden Bereich auf, der im Wesentlichen plan ausgebildet ist. Gegebenenfalls kann/können der oder auch die Profilkörper insgesamt plan ausgebildet sein.

In einigen bevorzugten Ausführungsformen der Erfindung weisen die Isolierprofile mindestens einen der Randabschnitte mit einem Verbindungselement ausgestattet auf, welches insbesondere in Form eines Einrollkopfes ausgebildet sein kann.

Grundsätzlich kann eine Vielzahl an Isolierstegen mit sehr unterschiedlicher Profilgeometrie verwendet werden, um erfindungsgemäße Isolierprofile herzustellen. Dies beinhaltet insbesondere auch Hohlkammerprofile. Typische Formen, Größen und Materialvarianten von Isolierprofilen finden sich z.B. in den Standardkatalogen der insulbar^{®} Produkte der Fa. Ensinger oder anderer Profilhersteller.

Eine direkte Temperaturkontrolle des Schweißvorganges bzw. des plastifizierten Polymerwerkstoffs im Bereich der Schweißnaht ist nicht notwendig. Vielmehr wird eine präzise und vollständige Kontrolle des Fügeprozesses durch die Überwachung und Regelung des Energieeintrags in das Ultraschall-Schweißsystem bzw. in die Sonotrode(n) ermöglicht. Typischerweise lässt die abgerufene (elektrische) Leistung dabei einen direkten Rückschluss auf die Schweißgüte und somit die Produktqualität des erfindungsgemäßen Isolierprofils zu.

Der relevante Schmelzpunkt lässt sich, falls nicht bekannt, durch kalorimetrische Messungen bestimmen. Eine Erweichungstemperatur lässt sich üblicherweise technischen Datenblättern und Tabellen von Werkstoffen entnehmen oder sie kann z.B. nach einem Vicat-Verfahren, insbesondere nach DIN EN ISO 306 zur Bestimmung der Vicat-Erweichungstemperatur, ermittelt werden.

Bevorzugt sind erfindungsgemäße Isolierprofile, bei denen das oder die ersten Funktionselemente aus einem Polymermaterial, bevorzugt auf der Basis eines thermoplastischen Polymers, hergestellt sind. Häufig wird ein thermoplastisches Polymer den Hauptbestandteil des Polymerwerkstoffes bilden, es kann aber auch ein thermoplastisches Polymer nur als Minoritätskomponente in dem Polymerwerkstoff enthalten sein.

Weitere Bestandteile des Polymerwerkstoffs können insbesondere aus Verstärkungsstoffen (z.B. Glas-, Kohle-, Mineral- oder Polymerfasern), Füllstoffen (Glas in Form von Glasmehl, Kugeln oder Hohlkugeln, Kreide, Talk, Holzmehl, Silikate, insbesondere Schichtsilikate oder amorphe Kieselsäuren), Additiven (z.B. Stabilisatoren, Gleit- und Schmiermitteln, Weichmachern, Schlagzähmodifikatoren, Wärme- und Hitzestabilisatoren, Flammschutzmitteln, Kopplern, Vernetzern), Farbstoffen (z.B. Farbstoffen oder Pigmenten), anderen Polymeren (z.B. bei Polymerblends oder Copolymeren) etc. ausgewählt werden.

Das Polymermaterial der Funktionselemente und/oder der Isolierstege kann dabei auch völlig oder nur in Teilbereichen porös ausgeführt werden. Dabei ist eine geschlossenzellige Porosität bevorzugt.

Wenn eine mechanische Belastung der Funktionselemente bei der Verarbeitung der Isolierprofile oder im Produkteinsatz absehbar ist, kann man Funktionselemente sowohl voluminöser dimensionieren als auch aus festeren/steiferen Werkstoffen herstellen, bevorzugt sind dann Werkstoffe mit einem E-Modul von ca. 2000 MPa oder mehr, besonders bevorzugt sind Werkstoffe mit einem E-Modul von ca. 3000 MPa oder mehr.

Bei alternativen erfindungsgemäßen Isolierprofilen ist/sind das oder die ersten Funktionselement(e) auf der Basis eines metallischen Materials gefertigt, wobei das metallische Material insbesondere in Form von Folien oder Blechen, gegebenenfalls in Kombination mit aus Kunststoff gefertigten Funktionsteilen, zum Einsatz kommt. Der Kontaktbereich wird dabei auch bei diesen Ausführungsformen aus einem zweiten Polymermaterial gefertigt, das mit dem ersten Polymermaterial kompatibel ist.

Die Verschweißung von zwei Fügepartnern gemäß dem erfindungsgemäßen Verfahren erfolgt durch eine Plastifizierung des Polymerwerkstoffs im Kontaktbereich der Fügepartner. Die Art, Zusammensetzung und der Zustand (z.B. Feuchtegehalt) des Werkstoffs sowie die eingebrachte Energiemenge, die Dauer (Vorwärm-, Heiz-, Anpress-, Haltedauer), der angelegte Druck bzw. Anpressdruck auf die Fügepartner haben Einfluss auf die Ausbildung der Verschweißung. Durch Einleitung von Energie in Form von Ultraschallschwingungen und gleichzeitiges Anlegen eines Anpressdrucks wird, ausgehend von der Verjüngung des Energierichtungsgebers, der Polymerwerkstoff beider Fügepartner aufgeschmolzen. Dadurch schmilzt insbesondere auch die Verjüngung des Energierichtungsgebers ab, die entstehende Schmelze im Fügebereich weicht dem Anpressdruck aus und wird ggf. in freie Seitenrichtungen ausgetrieben. Dabei bildet sich temporär eine plastifizierte Zone im Fügebereich aus, die nach Erkalten/Erstarren des Polymerwerkstoffs im Regelfall keine eindeutige Zuordnung mehr zu einem der Fügepartner erlaubt.

Durch eine entsprechende Auslegung der Energierichtungsgeber sind der Energieeintrag, die Qualität und insbesondere die Festigkeit der Schweißnaht steuerbar. Ebenso kann damit gesteuert werden, ob und wieviel Schmelze aus der Fügezone ausgetrieben wird und wohin die Schmelze fließt. Dies kann gezielt genutzt werden um ein visuell ansprechendes Produkt zu erhalten, insbesondere wenn innenliegende, nicht direkt einsehbare Schmelzereservoirs in der Auslegung vorgesehen werden.

Bevorzugt sind eine Anspitzung des Energierichtungsgebers mit einem Winkel von 30° bis 120° und eine verfügbare Höhe der Spitze (h_{ERG}) von ca. 200 µm bis ca. 3 mm, bevorzugt bis ca. 1,5 mm. Es sind aber auch stumpfe oder abgerundete bzw. mit Radien oder Stufen versehene Energierichtungsgeber möglich. Die Verwendung solcher Stufen ermöglicht es, die Höhe des "Abschmelzens" im Schweißprozess vorzugeben, da dann z.B. eine der Stufen als begrenzender Anschlag fungieren kann.

Die Einleitung der Ultraschallenergie kann auch dann erfolgen, wenn kein Energierichtungsgeber im Kontaktbereich des ersten Funktionselements vorhanden ist. Die Verortung der Energieeinleitung wird von einem Fachmann sinnvoll gewählt, nach Möglichkeit soll die Energieeinleitung in der Nähe der Kontaktzone der Fügepartner bzw. der Fügezone erfolgen, bevorzugt ist ein Abstand der Sonotrode von der Fügezone (bzw. zum Profilkörper) von ca. 15 mm oder weniger, besonders bevorzugt ist ein Abstand von ca. 6 mm oder weniger.

Das erfindungsgemäße Verfahren ermöglicht dabei insbesondere auch das Platzieren und Verschweißen von Funktionselementen auf Isolierstegen, die selbst als Hohlkammerprofil ausgeführt sind. Es können somit auch Funktionszonen direkt auf tendenziell eher dünnen Wandungen von Hohlkammerprofilen platziert werden.

Die Einleitung der Energie erfolgt in einer ersten Ausführungsform bevorzugt über eine statische Sonotrode, die z.B. in Form einer Schleifsonotrode mit im Wesentlichen rechteckigen Kontaktflächen, als Schleifkufe oder als Blocksonotrode, geschlitzte Blocksonotrode, Messersonotrode, Doppelmessersonotrode ausgeführt ist, der/die Fügepartner wird/werden dann üblicherweise im permanenten Kontakt zur Sonotrode an dieser vorbeigeführt.

Ein Fachmann kann geläufige Maßnahmen ergreifen, um den Verschleiß an der Sonotrode durch den permanenten und intensiven Reib- und Schleifkontakt zu den verwendeten Polymerwerkstoffen zu minimieren, ggf. auch um die Reibung selbst zu reduzieren.

Der Anpressdruck wirkt von der Sonotrode über die Fügepartner zu einem entgegengesetzten Anschlag bzw. einem Amboss. Dieser Amboss kann beispielsweise in Form von Rollen, Schleifkufen, als starrer Block oder Ähnliches ausgelegt sein.

Die Positionierung der beiden Fügepartner kann durch geometrische Begrenzungen erfolgen, z.B. Führungs- und Anschlagselemente in Form von Rollen, Schienen, Förderbänder oder Matrizen.

Das Verpressen kann unterteilt werden in ein Anpressen und ein Halten, wobei jeweils eine statische oder variable Anpresskraft (F_{A}) bzw. Haltekraft (F_{H}) ausgeübt wird. Eine Steuerung des Verpress-Prozesses kann dabei Kraft-gesteuert (eine Kraft F wird als Ziel vorgegeben, der Weg, bzw. die Verpresstiefe, ergibt sich daraus von selbst) oder Weg-gesteuert (ein Weg, bzw. eine Verpresstiefe, wird vorgegeben, das System bringt die dazu nötige Kraft auf) erfolgen.

Die nötigen Einwirkzeiten der Kräfte F_{A} und F_{H} sind abhängig von den diversen Rahmenbedingungen (Werkstoffauswahl, Geometrien, Schweißtemperaturen, Art der Krafteinleitung etc.). Wichtig hierbei ist jedoch, dass die Haltekraft F_{H} ausreichend lange wirkt, um ein Lösen der Fügeverbindung zu vermeiden. Üblicherweise lässt man die Haltekraft F_{H} so lange wirken, bis die plastifizierten Bereiche der Fügezone wieder erstarrt sind, insbesondere lässt man die Haltekraft F_{H} so lange wirken, bis die Temperatur der Fügezone unter die Erstarrungstemperatur oder unter die Kristallisationstemperatur oder unter die Glasübergangstemperatur gefallen ist.

Die Kräfte können beispielsweise über Rollen, Walzen, Stempel, Schleifkufen, Raupenbänder, Halte- und Führungs-Matrizen etc. auf die Fügepartner eingeleitet werden.

Die Fügeparameter, insbesondere Anpress- und Haltekräfte, sowie die jeweilige Dauer wird ein Fachmann für den jeweiligen Anwendungsfall sinnvoll und schnell ermitteln.

Die Zuführung der Isolierstege und Funktionselemente und/oder der Abzug des fertigen Isolierprofils kann insbesondere mittels aktiv angetriebener Förderbänder, Rollen, Klemmbacken etc. erfolgen.

Das erfindungsgemäße Verfahren lässt eine Vielzahl von Variationen zu, so dass die weiteren Funktionselemente nicht nur mit dem Profilkörper oder den Randabschnitten, sondern auch mit dem oder den ersten Funktionselement(en) stoffschlüssig verbunden werden können. Insbesondere kann ein erfindungsgemäßes Isolierprofil auch aus zwei oder mehr Isolierstegen zusammengesetzt sein, und der jeweilige Isoliersteg kann zwei oder mehr Profilkörper umfassen.

Über die Anlagenauslegung und die Wahl der Verfahrensparameter sowie die Auswahl und Anpassung von Werkstoffen und geometrischen Ausgestaltungen - insbesondere der Funktionselemente - lassen sich die Produkteigenschaften gut steuern. Darüber hinaus sind Nacharbeiten oder auch Konfektionierungsschritte möglich, um eventuell störenden Schmelzeaustrieb zu entfernen, die verschweißten Fügepartner bündig abzulängen, die Isolierprofile zu beschriften oder mit Abdeck-/Schutz- oder Funktionsfolien zu versehen. Dies kann auch in-line geschehen.

Nach dem erfindungsgemäßen Verfahren hergestellte Isolierprofile lassen sich treffsicher identifizieren. Geeignete Verfahren für die Analyse sind beispielsweise die optische Mikroskopie am Schliffbild oder am Isolierprofil selbst. Ebenso sind thermische Analysen der Fügezone möglich. Charakteristisch sind dabei der Masse- bzw. Schmelzefluss im Bereich der Fügezone, Hinweise auf Art der Plastifizierung, Hinweise auf Ort und Art des Energieeintrags, Hinweise auf Art der Führung der Profile, Hinweise auf Form, Geometrie und Zusammensetzung der Fügepartner.

Die vorliegende Erfindung bezieht sich insbesondere auf die folgenden Ausführungsformen:
1. Verfahren zur Herstellung eines Isolierprofils, insbesondere für die Herstellung von Fenster-, Türen- und Fassadenelementen, wobei das Isolierprofil einen aus einem ersten Polymerwerkstoff gefertigten Isoliersteg, welcher einen Profilkörper sowie ein erstes Funktionselement umfasst, welche sich in Längsrichtung des Isolierprofils erstrecken, wobei das erste Funktionselement in einem Kontaktbereich mit dem Isoliersteg stoffschlüssig verbunden ist,
   wobei in einem ersten Schritt sowohl der Profilkörper als auch das erste Funktionselement jeweils separat gefertigt und bereitgestellt werden, wobei in einem nachgelagerten zweiten Schritt der Profilkörper und das erste Funktionselement in Längsrichtung des zu bildenden Isolierstegs einer Ultraschall-Schweißvorrichtung zugeführt werden, in welcher der Profilkörper und das Funktionselement unter Ausbildung einer Schweißverbindung stoffschlüssig miteinander verbunden werden, wobei die Ultraschall-Schweißvorrichtung eine mit einer Sonotrode ausgerüstete Schweißzone umfasst, wobei die Sonotrode eine Ausnehmung aufweist, in welcher das Funktionselement während der Ausbildung der Schweißverbindung geführt wird,
   und wobei der Profilkörper und das Funktionselement während der Ausbildung der Schweißverbindung zu einer vorgegebenen ersten Querschnittsgeometrie, senkrecht zur Längsrichtung gesehen, zusammengeführt werden und danach in der vorgegebenen ersten Querschnittsgeometrie oder gegebenenfalls in einer von der ersten Querschnittsgeometrie abweichenden zweiten vorgegebenen Querschnittsgeometrie, senkrecht zur Längsrichtung gesehen, geführt werden, bis das Kunststoffmaterial der Schweißverbindung soweit erstarrt ist, dass der Profilkörper und das erste Funktionselement in der vorgegebenen Querschnittsgeometrie fixiert sind.
2. Verfahren nach Ausführungsform 1, wobei der Profilkörper und das erste Funktionselement kontinuierlich oder intermittierend der Ultraschall-Schweißvorrichtung zugeführt werden.
3. Verfahren nach Ausführungsform 1 oder 2, wobei der Profilkörper und/oder das erste Funktionselement als Endlosmaterial oder als Stangenware bereitgestellt werden.
4. Verfahren nach einer der Ausführungsformen 1 bis 3, wobei der Profilkörper und das Funktionselement vor dem Durchlaufen der Schweißzone mittels einer ersten Führungsvorrichtung in einer vorgegebenen, gegebenenfalls veränderlichen Relativposition zueinander positioniert und in der Längsrichtung geführt werden.
5. Verfahren nach einer der Ausführungsformen 1 bis 4, wobei der Profilkörper und das Funktionselement nach dem Durchlaufen der Schweißzone mittels einer zweiten Führungsvorrichtung in einer vorgegebenen, gegebenenfalls veränderlichen Relativposition zueinander positioniert und in der Längsrichtung geführt werden.
6. Verfahren nach einer der Ausführungsformen 1 bis 5, wobei der Prüfkörper und das Funktionselement beim Durchlaufen der Schweißzone und beim Durchlaufen einer optional zweiten Führungsvorrichtung im Anschluss an die Schweißzone mit einer jeweils vorgegebenen Kraft gegeneinander gepresst werden.
7. Verfahren nach einer der Ausführungsformen 1 bis 6, wobei das erste Funktionselement mit einem oder mehreren Abschmelzelement(en) gefertigt wird, welche(s) sich als Vorsprung von einer Oberfläche des Kontaktbereichs des ersten Funktionselements weg erstreckt/erstrecken, wobei sich der Vorsprung oder die Vorsprünge bevorzugt ca. 3 mm oder weniger, weiter bevorzugt ca. 1,5 mm oder weniger, von der Oberfläche weg erstreckt/erstrecken.
8. Verfahren nach einer der Ausführungsformen 1 bis 7, wobei der Profilkörper und das erste Funktionselement einander unter einem spitzen Winkel bezüglich der Längsrichtung zugeführt werden, wobei sich die Führung unter einem spitzen Winkel zumindest über Teilbereiche der Schweißzone und gegebenenfalls der ersten Führungsvorrichtung und/oder der zweiten Führungsvorrichtung erstreckt.
9. Verfahren nach einer der Ausführungsformen 1 bis 8, wobei das Ultraschallschweißen als Nahfeldschweißen durchgeführt wird, wobei die Sonotrode einen direkten Kontakt zum ersten Funktionselement aufweist und wobei vorzugsweise die Sonotrode mit einem maximalen Abstand ca. 6 mm oder weniger zum Profilkörper angeordnet ist.
10. Verfahren nach einer der Ausführungsformen 1 bis 9, wobei die Schweißzone eine Länge von ca. 5 cm bis ca. 50 cm aufweist und gegebenenfalls mehr als eine Sonotrode aufweist.
11. Verfahren nach einer der Ausführungsformen 1 bis 10, wobei in der Schweißzone die Sonotrode(n) bezogen auf die Längsrichtung zum Profilkörper unterschiedliche Winkelpositionen einnimmt/einnehmen, wobei die Winkelpositionen kontinuierlich und/oder stufenweise variieren und dadurch der Abstand der Sonotrode(n) zur Oberfläche des Isolierstegs in Durchlaufrichtung vermindert wird.
12. Verfahren nach einer der Ausführungsformen 1 bis 11, wobei die Schweißzone mindestens eine statische Sonotrode umfasst, wobei die statische Sonotrode insbesondere als Schleifsonotrode ausgebildet wird.
13. Verfahren nach einer der Ausführungsformen 1 bis 12, wobei das erste Funktionselement im Kontaktbereich mit einer Schulter ausgebildet wird, welche im Bereich der Schweißzone in Kontakt mit der oder den Sonotrode(n) steht.
14. Verfahren nach einer der Ausführungsformen 1 bis 13, wobei das Isolierprofil mit einer Geschwindigkeit von ca. 5 m/min oder mehr, bevorzugt von ca. 10 m/min oder mehr, in der Schweißzone in Längsrichtung gefördert wird.
15. Verfahren nach einer der Ausführungsformen 1 bis 14, wobei die Verweildauer des Profilkörpers und des ersten Funktionselements in der Schweißzone ca. 100 bis ca. 1000 msec, bevorzugt ca. 200 bis ca. 800 msec beträgt.
16. Verfahren nach einer der Ausführungsformen 1 bis 15, wobei die Sonotrode kontinuierlich betrieben wird.
17. Verfahren nach einer der Ausführungsformen 13 bis 16, wobei die Sonotrode mit einer schlitz- oder spaltförmigen Ausnehmung ausgebildet ist, derart, dass zwei parallel angeordnete Endbereiche der Sonotrode gebildet werden, welche mit dem Kontaktbereich des ersten Funktionselements beim Ausbilden der Schweißverbindung in Kontakt stehen.
18. Verfahren nach einer der Ausführungsformen 1 bis 17, wobei das Funktionselement an dem mit dem Profilkörper zu verbindenden Kontaktbereich mit einem oder mehreren als Energierichtungsgeber ausgeformten Vorsprüngen ausgebildet ist, wobei der Vorsprung oder die Vorsprünge insbesondere als Abschmelzelement(e) ausgebildet ist/sind.
19. Verfahren nach Ausführungsform 18, wobei das Funktionselement benachbart zu dem oder den Vorsprüngen mit einem oder mehreren Anschlagselementen versehen ist, welche(s) beim Zusammenführen von Funktionselement und Profilkörper die zu erzielende Querschnittsgeometrie definiert/definieren, wobei der Vorsprung oder die Vorsprünge vorzugsweise auch mit der Funktion als Schulter ausgebildet ist/sind.
20. Verfahren nach einer der Ausführungsformen 1 bis 19, dadurch gekennzeichnet, dass die stoffschlüssige Verbindung zwischen dem oder den ersten Funktionselement(en) und dem Profilkörper entlang der Längsrichtung des Isolierprofils kontinuierlich, abschnittsweise oder punktuell erfolgt.
21. Verfahren nach einer der Ausführungsformen 1 bis 20, wobei neben dem Profilkörper auch die Funktionselemente als Endlosmaterial bereitgestellt werden und nach der Herstellung der stoffschlüssigen Verbindung derselben das Isolierprofil auf eine vorgegebene Länge abgelängt wird, vorzugsweise durch einen Schneide- oder Stanz- oder Fräsprozess.
22. Verfahren nach Ausführungsform 21, wobei die Endlosmaterialien auf Rollen, Spulen oder Haspeln bereitgestellt werden.
23. Verfahren nach Ausführungsform 21, wobei der Profilkörper und/oder die Funktionselemente vor der Herstellung der stoffschlüssigen Verbindung in Form von Stangenware bereitgestellt wird/werden.
24. Isolierprofil herstellbar nach einem Verfahren gemäß einer der Ausführungsformen 1 bis 23, wobei der Profilkörper einen sich in Längsrichtung des Isolierprofils erstreckenden Bereich aufweist, der im Wesentlichen plan ausgebildet ist.
25. Isolierprofil nach Ausführungsform 24, wobei der Profilkörper in vorgegebenen, insbesondere regelmäßigen, Abständen Durchgangsöffnungen aufweist.
26. Isolierprofil nach Ausführungsform 24 oder 25, wobei der Isoliersteg mit mindestens einem Randabschnitt ausgebildet ist, welcher ein Verbindungselement umfasst, wobei das Verbindungselement insbesondere die Form eines Einrollkopfes zur Verbindung mit Metallprofilen aufweist.
27. Isolierprofil nach einer der Ausführungsformen 24 bis 26, wobei die stoffschlüssige Schweißverbindung zwischen dem Profilkörper und dem ersten Funktionselement eine Festigkeit von ca. 2 N/mm oder mehr, bevorzugt ca. 5 N/mm oder mehr, besonders bevorzugt ca. 10 N/mm oder mehr, aufweist.
28. Isolierprofil nach einer der Ausführungsformen 24 bis 27, wobei der Isoliersteg integral mit dem Profilkörper ausgebildete zweite und gegebenenfalls weitere Funktionselemente umfasst.
29. Isolierprofil nach einer der Ausführungsformen 24 bis 28, wobei das oder die ersten Funktionselement(e) ausgewählt ist/sind aus im Querschnitt planaren, gebogenen, insbesondere teilkreisförmigen, verzweigt oder abgewinkelt ausgebildeten Flächenelementen und/oder einen Hohlraum oder mehrere Hohlräume umschließenden Elementen, wobei das oder die Funktionselement(e) bevorzugt einen im Querschnitt zur Längsrichtung T-förmigen, pfeilförmigen oder hakenförmigen Abschnitt aufweist/aufweisen.
30. Isolierprofil nach einer der Ausführungsformen 24 bis 29, wobei das oder die ersten Funktionselement(e) eine Vielzahl an, gegebenenfalls geschlossenen, Hohlräumen in Längsrichtung des Isolierprofils bildet/bilden, wobei die Hohlräume insbesondere aneinandergereiht ausgebildet sind.
31. Isolierprofil nach einer der Ausführungsformen 24 bis 30, wobei der Profilkörper und das oder die ersten Funktionselement(e) aus einem schweißbaren Polymermaterial hergestellt ist/sind, welches bevorzugt auf einem thermoplastischen Polymer basiert, welches ausgewählt ist aus Polyamiden, Polyestern, Polyolefinen, Polyketonen, Vinylpolymeren, Polyether, Polycarbonat, Polyphenylensulfid und deren Copolymeren oder Blends dieser Materialien.
32. Isolierprofil nach Ausführungsform 31, wobei das Polymermaterial des oder der ersten Funktionselement(e) so ausgewählt ist, dass es mit dem Polymermaterial des Profilkörpers kompatibel ist.
33. Isolierprofil nach einer der Ausführungsformen 24 bis 32, wobei die Oberfläche und/oder ein Kern des oder der ersten Funktionselemente teilweise Metall-beschichtet oder metallisiert oder metallisch ausgerüstet ist.
34. Isolierprofil nach einer der Ausführungsformen 24 bis 33, wobei das Polymermaterial des Profilkörpers und/oder des ersten Funktionselements faserverstärkt, insbesondere Glasfaser-verstärkt, ist.

Diese und weitere Vorteile der Erfindung werden im Folgenden anhand der Zeichnung noch näher erläutert. Es zeigen im Einzelnen:
- Figur 1: eine erste Ausführungsform eines erfindungsgemäß hergestellten Isolierprofils;
- Figuren 2A und 2B: zwei weitere Varianten der ersten Ausführungsform des erfindungsgemäß hergestellten Isolierprofils;
- Figur 3: eine weitere Variante der ersten Ausführungsform der erfindungsgemäßen Isolierprofile;
- Figuren 4 und 5: verschiedene beispielhafte Varianten der Herstellung erfindungsgemäßer Isolierprofile;
- Figur 6: eine weitere Variante eines erfindungsgemäß hergestellten Isolierprofils;
- Figuren 7A und 7B: schematische Darstellungen erfindungsgemäß zu verwendender Sonotroden;
- Figur 8: eine erste Variante einer erfindungsgemäß zu verwendenden Ultraschall-Schweißvorrichtung;
- Figuren 9 bis 11: weitere Varianten erfindungsgemäß zu verwendender Ultraschall-Schweißvorrichtungen;
- Figuren 12A und 12B: eine Ausführungsform der Ultraschall-Schweißvorrichtung gemäß Figur 8 in perspektivischer Darstellung sowie Schnittdarstellungen verschiedener Abschnitte der Vorrichtung;
- Figur 13: eine schematische Darstellung eines erfindungsgemäßen Verfahrens zur Herstellung eines erfindungsgemäßen Isolierprofils;
- Figur 14: mehrere Varianten von Funktionselementen;
- Figuren 15 bis 17: weitere Varianten von Funktionselementen für die erfindungsgemäße Herstellung von Isolierprofilen einschließlich eines Schliffbildes einer stoffschlüssigen Verbindung; und
- Figur 18: eine Variante einer Prüfvorrichtung für Isolierprofile zur Bestimmung der Festigkeit eines erfindungsgemäß angefügten Funktionselements.

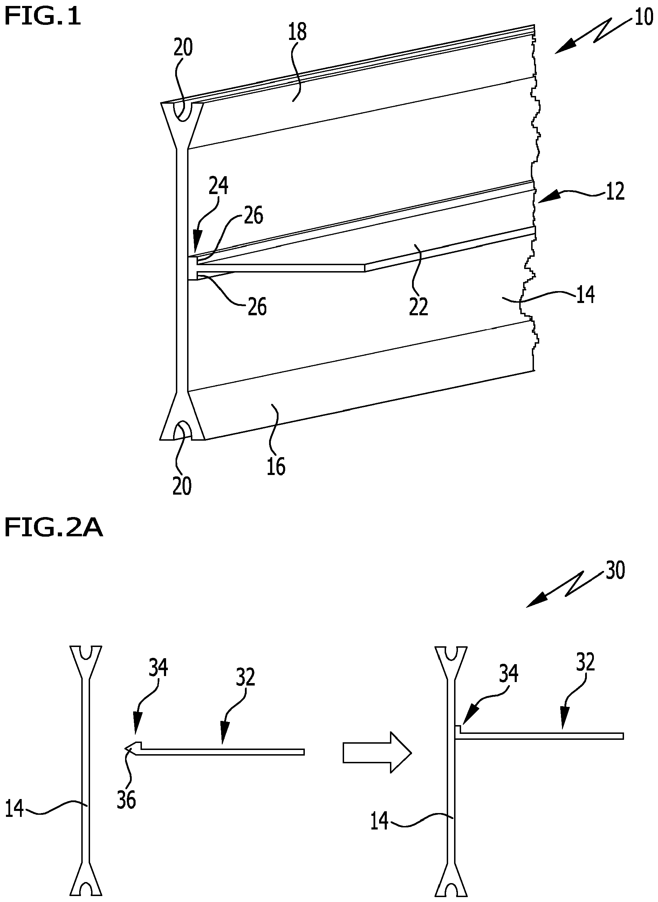

Figur 1 zeigt schematisch eine erste Ausführungsform eines erfindungsgemäß hergestellten Isolierprofils 10, welches auf einem Isoliersteg 12 mit einem planen Profilkörper 14 basiert. An den Profilkörper 14 schließen sich Randabschnitte 16, 18 an, welche als sogenannte Einrollköpfe ausgebildet sind. Der Isoliersteg 12 wird aus einem ersten Polymerwerkstoff gefertigt.

Die Randabschnitte 16, 18 verlaufen in Längsrichtung des erfindungsgemäßen Isolierprofils 10 und sind quer zur Längsrichtung beabstandet an den Außenrändern des Profilkörpers 14 angeformt. Die Herstellung solcher Isolierstege 12 aus einem Polymerwerkstoff ist mit großer Genauigkeit der Querschnittsgeometrie und hoher Linearität in einem Extrusionsschritt ohne größeren Aufwand wirtschaftlich möglich. Die dafür erforderlichen Extrusionswerkzeuge sind wenig komplex und auch relativ kostengünstig erhältlich.

Die als Einrollköpfe ausgebildeten Randabschnitte 16, 18 können bei der Verarbeitung des erfindungsgemäßen Isolierprofils in Metall-Kunststoff-Verbundprofilen in entsprechende Nuten der Metallprofile eingeschoben und mit diesen bei Bedarf in einem sogenannten Einrollschritt schubfest verbunden werden.

Die Randabschnitte 16, 18 können darüber hinaus eine Nut 20 aufweisen, in welche ein sogenannter Schmelzdraht (nicht gezeigt) eingelegt werden kann. Vorzugsweise wird der Schmelzdraht in der Nut 20 im Form- und/oder Kraftschluss gehalten. Nach Herstellung der Einrollverbindung kann der Schmelzdraht durch Erwärmen, z.B. im Pulverlack-Einbrennprozess, zur weiteren Sicherung der schubfesten Verbindung des Isolierprofils mit dem Metallprofil aktiviert werden.

Das Isolierprofil 10 umfasst ferner ein separat gefertigtes erstes streifenförmiges Funktionselement 22, welches mittels eines erfindungsgemäßen Ultraschall-Schweißverfahrens mit dem Profilkörper 14 stoffschlüssig verbunden wurde. Das erste Funktionselement 22 ist in diesem Ausführungsbeispiel aus einem zweiten Polymerwerkstoff gefertigt, welcher mit dem ersten Polymerwerkstoff identisch oder von diesem verschieden sein kann. Für die stoffschlüssige Verbindung ist es wichtig, dass im Fall der Verwendung verschiedener Polymerwerkstoffe diese miteinander kompatibel sind. Zahlreiche Beispiele für miteinander kompatiblen Polymerwerkstoffe finden sich unter anderem in dem Saechtling Kunststoff Taschenbuch, 30. Ausgabe, ISBN 978-3-446-40352-9, Seiten 739 und 740 (Tafel 8.5 und Tafel 8.6).

Geeignet sind vor allem Kombinationen, die in Tafel 8.5 als "mischbar oder miteinander verträglich" qualifiziert werden oder in Tafel 8.6 mit den Symbolen "+" und "O" charakterisiert sind.

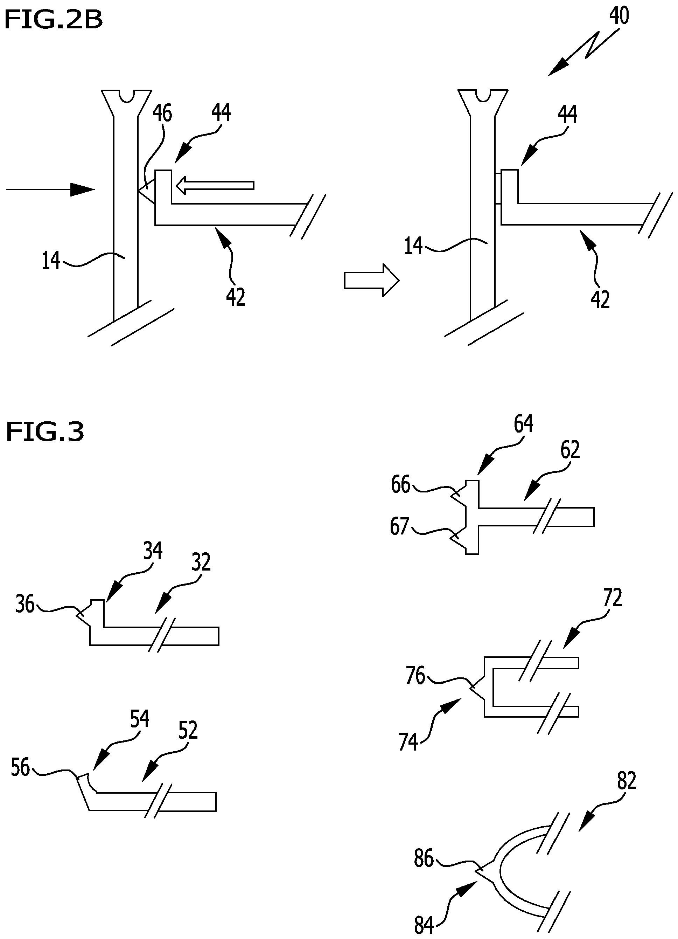

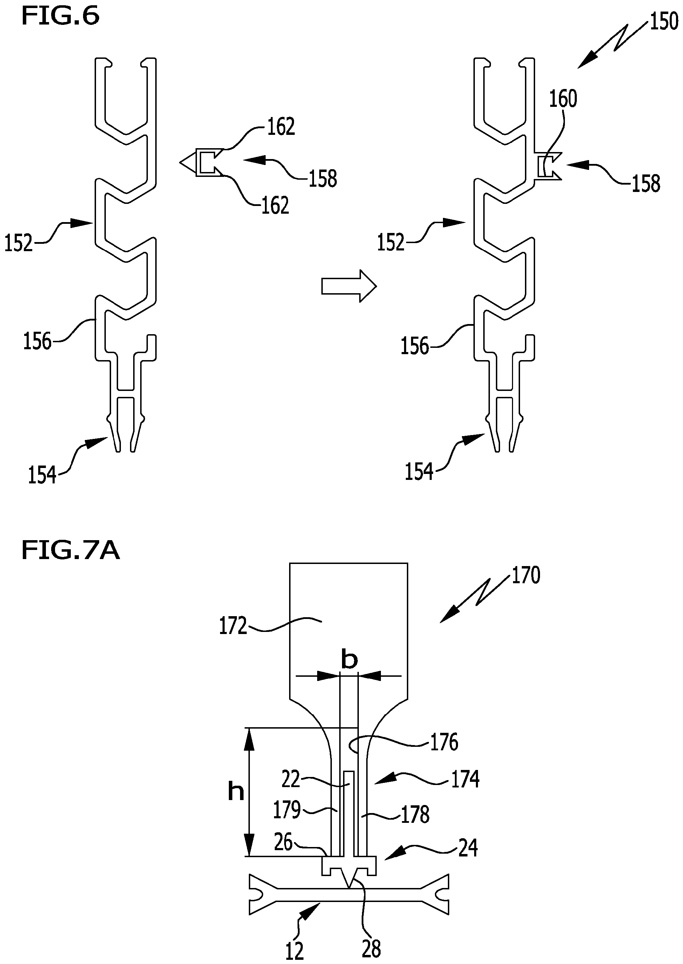

Zur Erleichterung der stoffschlüssigen Verbindung ist das erste Funktionselement 22 an einem seiner Randbereiche mit einem Kontaktbereich 24 ausgebildet, der bei dieser Ausführungsform eine T-Form aufweist, so dass beidseits des Funktionselements 22 Schultern 26 abstehen, deren Funktion im Rahmen der Beschreibung des erfindungsgemäßen Ultraschall-Schweißverfahrens im Zusammenhang sowohl mit den Figuren 2A und 2B als auch mit der Figur 7A noch näher erläutert werden wird.

Auch für die Fertigung des ersten Funktionselements 22 stehen dem Fachmann kostengünstige Fertigungsverfahren zur Verfügung, beispielsweise die Extrusion, falls das erste Funktionselement aus einem Polymerwerkstoff gefertigt wird. Ebenso kann das Funktionselement einem großflächigen Bahnmaterial (z.B. einer Blasfolie, kalandrierten Platte oder Folie) entstammen, welches dann passend zugeschnitten, gestanzt und/oder umgeformt wird.

Auch kann der Kontaktbereich durch Anextrudieren an einen beispielsweise planen Grundkörper angefügt werden.

In den Figuren 2A und 2B sind Varianten erfindungsgemäßer Isolierprofile 30 bzw. 40 gezeigt, bei denen jeweils der plane Profilkörper 14 des Isolierstegs 12, wiederum im Wesentlichen mittig zu dessen Querrichtung, mit einem ersten streifenförmigen Funktionselement 32 bzw. 42 erfindungsgemäß stoffschlüssig mittels eines Ultraschall-Schweißverfahrens verbunden wird.

Die ersten Funktionselemente 32 und 42 der Isolierprofile 30, 40 sind jeweils separat von dem Isoliersteg 12 bzw. dessen Profilkörper 14 gefertigt und werden anschließend mit dem Isoliersteg 12 bzw. dessen Profilkörper 14 erfindungsgemäß mittels eines Ultraschall-Schweißverfahrens stoffschlüssig verbunden.

Im Ausführungsbeispiel der Figur 2A ist das erste Funktionselement 32 wiederum aus einem Polymermaterial hergestellt, welches mit dem Polymermaterial des Profilkörpers 14 kompatibel, wenn nicht identisch ist.

Das erste Funktionselement 32 weist an einem seiner Randbereiche einen Kontaktbereich 34 auf, welcher L-förmig ausgestaltet ist und einen im Querschnitt Dreieck-förmigen Vorsprung 36 angeformt aufweist. Dieser Vorsprung 36 des Kontaktbereichs 34 fungiert bei dem Ultraschall-Schweißverfahren als sogenannter Energierichtungsgeber, der bei der stoffschlüssigen Verbindung des Funktionselements 32 schmilzt (Abschmelzelement) und verpresst wird.

Das erste Funktionselement 42 des Isolierprofils 40 der Figur 2B kann aus einem Werkstoff hergestellt werden, der nicht zwingend mit dem ersten Polymerwerkstoff des Isolierstegs 12 kompatibel ist, insbesondere auch aus einem keramischen oder metallischen Material, z.B. in Form eines Blechstreifens oder eines gelochten Blechs.

Zur stoffschlüssigen Verbindung mit dem Isoliersteg 12 weist das erste Funktionselement 42 einen L-förmig ausgestalteten Kontaktbereich 44 auf, welcher mit einem Vorsprung 46 versehen ist, welcher aus einem mit dem ersten Polymerwerkstoff kompatiblen zweiten Polymerwerkstoff besteht.

Beim stoffschlüssigen Verbinden des ersten Funktionselements 42 mit dem Profilkörper 14 wird der Vorsprung 46 aufgeschmolzen und verpresst.

Der Vorsprung 46, der wiederum als sogenannter Energierichtungsgeber beim Ultraschall-Schweißverfahren fungiert, wird stoff- und/oder formschlüssig mit dem Kontaktbereich 44 des ersten Funktionselements verbunden.

Die stoffschlüssige Verbindung der Kontaktbereiche der ersten Funktionselemente 22, 32 und 42 mit dem Profilkörper 14 erfolgt jeweils ohne Zusatz von Hilfsstoffen.

Die Verbindung zwischen dem Isoliersteg 12 bzw. dessen Profilkörper und den ersten Funktionselementen 22, 32 bzw. 42 kann erfindungsgemäß kontinuierlich oder in vorgegebenen, insbesondere in regelmäßigen Abständen (punktuell oder abschnittsweise) hergestellt werden.

Die Verbindung zwischen dem Isoliersteg 12 und dem ersten Funktionselement 22, 32 bzw. 42 muss häufig lediglich so stabil sein, dass das Isolierprofil 10, 30 bzw. 40 während des Transports und der Verarbeitung bis zum Metall-Kunststoff-Verbundprofil sicher seine Form beibehält, da das in den Figuren 1A sowie 2A und 2B gezeigte erste Funktionselement 22, 32 bzw.42 im verbauten Zustand häufig keine Kräfte aufnehmen muss und beispielsweise lediglich der Unterdrückung von Konvektionsströmungen im Inneren eines Metall-Kunststoff-Verbundprofils dient. Derartige Funktionselemente, auch Fahnen genannt, stehen typischerweise mehrere Zentimeter von der Oberfläche des Isolierstegs ab.

Die Figur 3 zeigt weitere Varianten von ersten Funktionselementen im Vergleich mit dem in Figur 2A verwendeten Funktionselement 32.

Das erste Funktionselement 52 weist einen leicht abgekröpften Kontaktbereich 54 auf, dessen Spitze 56 als Vorsprung ausgebildet ist, der sich beim Ultraschallschweißen aufschmelzen und bei der Ausbildung der stoffschlüssigen Verbindung mit dem zugehörigen Isoliersteg verpressen lässt.

Das erste Funktionselement 62 der Figur 3 weist in seinem Kontaktbereich 64 eine T-förmige Konfiguration auf, bei der zwei Vorsprünge 66, 67 als Energierichtungsgeber ausgebildet sind. Diese Art des Kontaktbereichs hat den Vorteil, dass die beim Ultraschallschweißen entstehende Schmelze zumindest zu großen Teilen im Zwischenraum zwischen den Vorsprüngen aufgenommen werden kann und so eine optisch ansprechende Schweißverbindung zwischen dem ersten Funktionselement und dem zugehörigen Profilkörper hergestellt werden kann. Auch die sich ausbildende Kontaktfläche kann damit, falls gewünscht, vergrößert werden.

Zusätzlich wird hierbei der Energieeintrag einer Sonotrode direkt, insbesondere linear, von den Schultern zu den Spitzen der Abschmelzelemente geleitet, was eine verbesserte Effizienz in der Prozessführung ergibt.

Am Beispiel der ersten Funktionselemente 72 und 82 soll demonstriert werden, dass erfindungsgemäß auch komplexer aufgebaute erste Funktionselemente verwendet werden können, wobei auch hier die Kontaktbereiche 74 bzw. 84 mit Vorsprüngen 76 bzw. 86 versehen sind, welche beim Ultraschallschweißen zur Ausbildung einer stoffschlüssigen Verbindung aufgeschmolzen und verpresst werden.

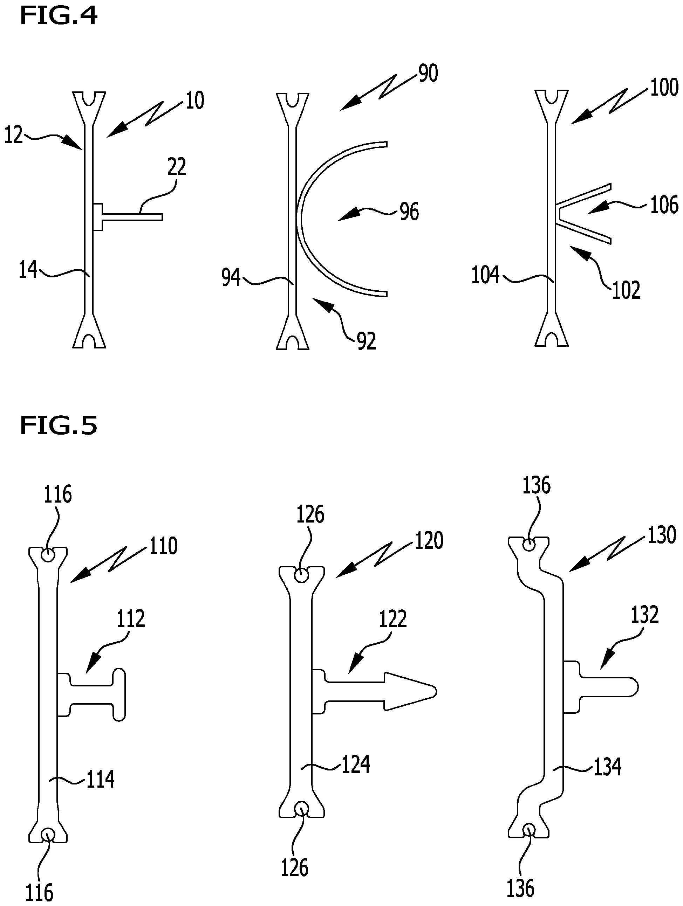

Figur 4 zeigt im Vergleich zu dem Isolierprofil 10 der Figur 1 weitere Variationsmöglichkeiten bezüglich des ersten Funktionselements.

Bei der Variante des Isolierprofils 90 der Figur 4 ist ein im Querschnitt halbkreisförmiges erstes Funktionselement 96 stoffschlüssig mittels Ultraschallschweißen mit einem Profilkörper 94 eines Isolierstegs 92 verbunden.

Bei dem in Figur 4 gezeigten Isolierprofil 100 ist ein im Querschnitt im Wesentlichen U- bis V-förmiges erstes Funktionselement 106 stoffschlüssig mittels Ultraschallschweißen mit einem Profilkörper 104 eines Isolierstegs 102 verbunden.

Es ist offensichtlich, dass für die Varianten 90 und 100 der ersten Funktionselemente Sonotroden verwendet werden müssen, welche geometrisch dem Querschnitt der Funktionselemente angepasst sind, damit trotz der ausladenden Funktionszonen dieser Elemente eine zufriedenstellende Schweißverbindung erzielbar ist.
Figur 5 zeigt weitere Varianten erfindungsgemäß hergestellter Isolierprofile 110, 120 und 130, bei denen erfindungsgemäß erste Funktionselemente 112, 122 bzw. 132 stoffschlüssig mit den Profilkörpern 114, 124 bzw. 134 verbunden sind. Die ersten Funktionselemente 112, 122 bzw. 132 weisen dabei an ihrem jeweiligen freien Ende eine T-Form, eine Pfeilform oder die Form eines Dorns (sogenannte Nasen bzw. kurze Fahnen) auf.

Der Profilkörper 134 ist darüber hinaus an seinen Randbereichen, welche mit Einrollköpfen versehen sind, abgekröpft. Die Einrollköpfe der Isolierprofile 110, 120, 130 sind jeweils mit Nuten versehen (ähnlich wie in Figur 1 gezeigt), welche einen sogenannten Schmelzdraht 116, 126 bzw. 136 formschlüssig aufnehmen.

Figur 6 zeigt ein Isolierprofil in Form eines Fassadenabstandhalters 150 mit einem mäanderförmig ausgebildeten Isoliersteg 152, der an einem Ende seines Profilkörpers 156 einen Randabschnitt in Form eines Verankerungsvorsprungs 154 aufweist. Der Isoliersteg 152 wird typischerweise in einem Extrusionsschritt einteilig gefertigt und kann im Rahmen der vorliegenden Erfindung mit einem oder mehreren Funktionselementen versehen werden. Im Beispiel der Figur 6 wird ein U-förmiges Halteprofil 158 als erstes Funktionselement stoffschlüssig mit dem Profilkörper 156 verbunden. Das Funktionselement 158 weist in seinem U-förmigen Querschnitt eine Aufnahmenut 160 auf, welche beidseits von je einem Vorsprung 162 begrenzt wird. Die Vorsprünge 162 weisen an ihren freien Enden jeweils einen zum Inneren der Nut 160 gerichteten Rastvorsprung auf.

Das Halteprofil 158 kann beispielsweise Dichtelemente, z.B. in Form von Dichtlippen, aufnehmen und fixieren und kann an dem Profilkörper 156 des Isolierstegs 150 stoffschlüssig an einer oder mehreren Positionen befestigt werden. Selbstverständlich können die Funktionselemente (hier das Halteprofil 158) nicht nur auf einer Seite des Fassadenabstandhalters 150, sondern auch auf sich gegenüber liegenden Seiten platziert und stoffschlüssig mit dem Profilkörper 156 verbunden werden.
Figur 7A zeigt eine bei dem erfindungsgemäßen Verfahren verwendbare Sonotrode 170 mit einer spalt- oder schlitzförmigen Ausnehmung, die mit ihrem oberen Bereich 172 in einer Ultraschall-Schweißvorrichtung (nicht gezeigt) gehalten wird. Ebenfalls nicht gezeigt ist ein notwendiges Widerlager (Amboss) an der Unterseite des Isolierstegs 12, auf welchem dieser aufliegt und über das der Isoliersteg während des Schweißens geführt bzw. gezogen wird. Das Aspektverhältnis von Spalt- oder Schlitzbreite b zur Höhe h wird vorzugsweise ca. 5 oder mehr betragen. Damit lassen sich auch erste Funktionselemente verarbeiten, deren Ausdehnung senkrecht zur Isolierstegoberfläche ausreichend ist, um als sogenannte Fahne zu fungieren. Überraschenderweise beeinträchtigt ein solch großes Aspektverhältnis die Funktionalität der Sonotrode nicht merklich.

An den oberen Bereich 172 anschließend ist der untere Bereich 174 der Sonotrode 170 mit einer spalten- oder schlitzförmigen Ausnehmung 176 ausgebildet, in der - wie in Figur 7A gezeigt - ein erstes Funktionselement, hier ein Funktionselement 22, bis auf seinen Kontaktbereich 24 im Wesentlichen vollständig in der Ausnehmung 176 aufgenommen wird.

Der untere Bereich 174 der Sonotrode 170 endet mit seinen die Ausnehmung 176 begrenzenden Wandelementen 178, 179 an der Oberseite des Kontaktbereichs 24 des ersten Funktionselements 22. Die Positionierung der Sonotrode 170 wird so vorgenommen, dass im vorliegend gezeigten Abschnitt der Schweißvorrichtung der Energieeintraggeber 28 des ersten Funktionselements 22 in körperlichem Kontakt mit dem Isoliersteg 12 steht.

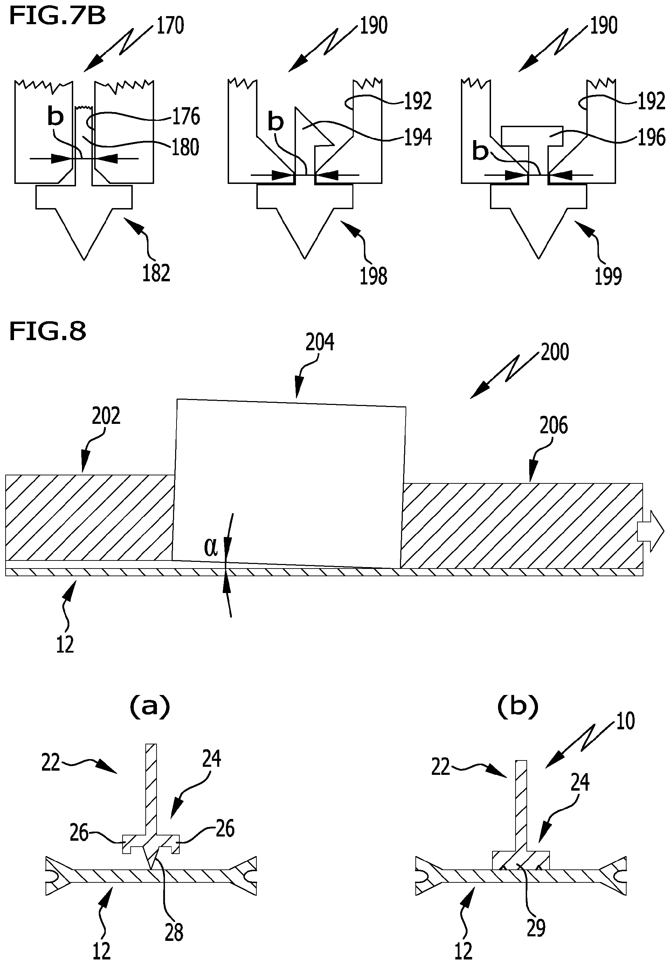

In Figur 7B ist ein Detail der Sonotrode 170 gezeigt, wobei in der Ausnehmung 176 ein erstes Funktionselement 180 bis auf dessen Kontaktbereich 182 vollständig aufgenommen ist. Daneben ist eine Variante einer Sonotrode 190 mit einer Ausnehmung 192 gezeigt, die größer dimensioniert ist als die Ausnehmung 176 und damit auch erste Funktionselemente 194, 196 aufnehmen kann, die von ihrem Kontaktbereich 198 bzw. 199 beabstandet unterschiedliche und ausgreifendere Geometrien aufweisen als das erste Funktionselement 180.

In Figur 8 ist schematisch eine erste Variante einer Vorrichtung 200 zur Durchführung des erfindungsgemäßen Verfahrens zur Herstellung von Isolierprofilen dargestellt mit einer ersten Führungszone 202, in der die getrennt hergestellten und miteinander zu verbindenden Elemente des Isolierprofils, d.h. beispielsweise der Isoliersteg 12 einerseits und das erste Funktionselement 22 andererseits, in einer vorgegebenen Orientierung zueinander von einer ersten Führungsvorrichtung (nicht gezeigt) der darauffolgend angeordneten Schweißzone 204 und der darin untergebrachten Ultraschall-Schweißvorrichtung zugeführt werden.

An die Schweißzone 204 anschließend ist eine Haltezone 206 gezeigt, die die in der Schweißzone 204 zusammengefügten und stoffschlüssig verbundenen Komponenten als fertiges Isolierprofil 10 aus der Schweißzone 204 heraus fördert. In der Haltezone 206 wird hierfür eine zweite Führungsvorrichtung (nicht gezeigt) platziert.

Eine die Schweißzone 204 bildende Sonotrode ist in der Figur 8 gegenüber dem Isoliersteg 12 in einem spitzen Winkel α angeordnet, beispielsweise kleiner als ca. 5°, insbesondere kleiner als ca. 3°, so dass sich für die freien Enden der Sonotrode, zwischen denen die Ausnehmung angeordnet ist, in der das erste Funktionselement geführt wird, mit zunehmendem Abschmelzen des als Energieeintragsgeber fungierenden Vorsprungs am Kontaktbereich 24 des ersten Funktionselements 22 eine Annäherung an die Oberfläche des Isolierstegs 12 ergibt. Dies ist in den beiden der Figur 8 beigefügten Schnittzeichnungen (a) und (b) schematisch veranschaulicht. Aufgrund dieser Geometrie wird das Material des Energieeintragsgebers 28 fortlaufend aufgeschmolzen und zeitgleich so verpresst, dass es die zwischen den Schultern 26 vorhandenen Hohlräume mit Schmelzeaustrieb füllt und einen verpressten Bereich, der in der Figur 8 in dem Detail (b) mit dem Bezugszeichen 29 bezeichnet ist, bildet.

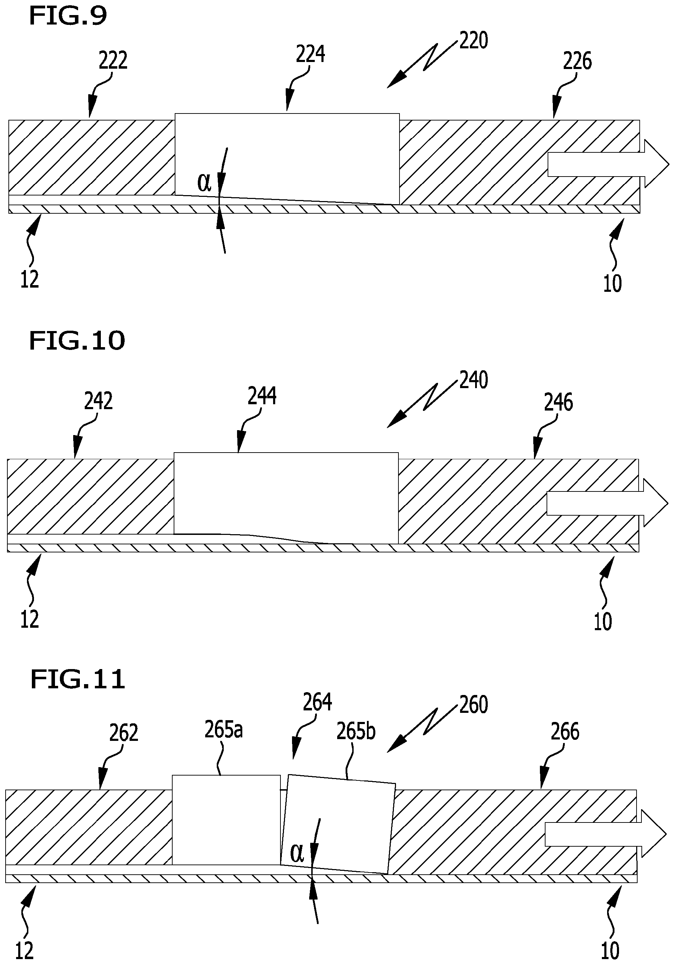

Die Figur 9 zeigt eine zweite Variante einer Vorrichtung 220 zur Durchführung des erfindungsgemäßen Verfahrens zur Herstellung von Isolierprofilen. Hier wird einer ersten Führungszone 222 eine erste Führungsvorrichtung (nicht dargestellt) bereitgestellt, über die der Isoliersteg 12 und das erste Funktionselement 22 synchron, bevorzugt kontinuierlich, der Schmelzzone 224 zugeführt werden, die eine Sonotrode beinhaltet.

Die Sonotrode 224 ist parallel zu dem Transportweg und dem Verlauf des Isolierstegs 12 ausgebildet, wobei allerdings die Unterseite der Sonotrode 224 in einem spitzen Winkel α gegenüber der Oberfläche des Isolierstegs 12 verläuft, so dass sich beim Durchlaufen der Schweißzone 224 eine geometrische Annäherung des ersten Funktionselements 22 und dessen Kontaktbereichs 24 an die Oberfläche des Isolierstegs 12 ergibt. Im Querschnitt gesehen, ergeben sich wieder Konfigurationen wie in den Figuren 8(a) und (b) gezeigt.

Anschließend an die Schweißzone 224 ist eine Haltezone 226 mit einer zweiten Führungsvorrichtung (nicht gezeigt) vorgesehen, die die stoffschlüssig miteinander verbundenen Elemente des Isolierstegs 12 und des ersten Funktionselements 22 in der gewünschten Querschnittsgeometrie hält, so dass die gebildete Schweißnaht abkühlen kann und am Ende ein handhabbares Isolierprofil 10 mit der gewünschten Geometrie erhalten wird.

Eine dritte Variante einer Vorrichtung 240 zur erfindungsgemäßen Herstellung eines Isolierprofils ist in der Figur 10 gezeigt, bei der wiederum eine erste Führungsvorichtung (nicht gezeigt) in der ersten Führungszone 242 verwendet wird, um ein erstes Funktionselement mit vorgegebener Geometrie gegenüber dem Isoliersteg 12 einer Schweißzone 244 (Sonotrode) zuzuführen.

Auch hier ist die Sonotrode 244 wiederum waagerecht ausgerichtet, jedoch mit einer veränderlichen Geometrie an der Unterseite ausgebildet, so dass sich wiederum beim Durchlaufen der Schweißzone 244 eine Annäherung des ersten Funktionselements an den Isoliersteg 12 ergibt, wie dies wiederum den beiden Darstellungen der Figur 8(a) und (b) entspricht. Auch bei dieser Variante ist nachfolgend zur Schweißzone 244 eine zweite Haltevorrichtung (nicht gezeigt) in der Haltezone 246 vorgesehen, die die stoffschlüssig verbundene Kombination von Isoliersteg 12 und erstem Funktionselement als Isolierprofil 10 führt und bis zum Erkalten der Schweißnaht in der entsprechenden Geometrie fixiert.

Eine vierte Variante einer Vorrichtung 260 zur erfindungsgemäßen Herstellung eines Isolierprofils ist in Figur 11 gezeigt, bei der wiederum ein Isoliersteg 12 sowie ein erstes Funktionselement zusammen in einer vorgegebenen geometrischen Anordnung zueinander einer Schweißzone 264 zugeführt werden.

Bei diesem Ausführungsbeispiel einer Vorrichtung 260 zur Durchführung des erfindungsgemäßen Verfahrens ist die Schweißzone 264 in zwei Abschnitte aufgeteilt, die von den beiden Sonotroden 265a und 265b gebildet werden.

Die Sonotrode 265a ist im Wesentlichen waagerecht, d.h. weitgehend parallel zu der Durchlaufrichtung des Isolierstegs 12 und des ersten Funktionselements, angeordnet und sorgt durch Energieeintrag dafür, dass der Energieeintraggeber des ersten Funktionselements angeschmolzen wird. In der zweiten Phase der Schmelzzone 264 wird über eine Sonotrode 265b, die in einem Winkel α zur Transportrichtung des Isolierstegs 12 angeordnet ist, eine Positionsverschiebung des Kontaktbereichs des ersten Funktionselements gegenüber der Oberfläche des Isolierstegs 12 erreicht, so dass dann beim Übergang aus der Schweißzone 264 zu einer zweiten Führungsvorrichtung (nicht gezeigt) in einer Haltezone 266 wiederum die gewünschte Querschnittsgeometrie des herzustellenden Isolierprofils erhalten wird. Die Anordnung von Isoliersteg 12 und erstem Funktionselement 22 vor und nach dem Schweißvorgang entspricht wieder den beiden Darstellungen der Figur 8(a) und (b).

Auch wenn bei der Beschreibung der erfindungsgemäßen Verfahren im Zusammenhang mit den Figuren 8 bis 11 immer davon ausgegangen wurde, dass die zweite Führungsvorrichtung in den Haltezonen 206, 226, 246, 266 jeweils dafür sorgt, dass die in der Schweißzone 204, 224, 244, 264 erzielte Querschnittsgeometrie erhalten bleibt, bis die Schweißnaht ausreichend abgekühlt und damit ausgehärtet bzw. erstarrt ist, kann durchaus vorgesehen sein, dass in der zweiten Führungsvorrichtung eine Veränderung der Querschnittsgeometrie erzeugt wird, so dass das erste Funktionselement 22 nicht mehr senkrecht von dem Isoliersteg 12 absteht, wie dies in Figur 8(b) gezeigt ist, sondern mit einem davon abweichenden Winkel geführt wird, so dass dann die Schweißnaht in der geneigten Konfiguration erstarrt und so eine von der Abbildung in Figur 8(b) abweichende Konfiguration von Isolierprofil 12 und erstem Funktionselement 22 erzielt wird.

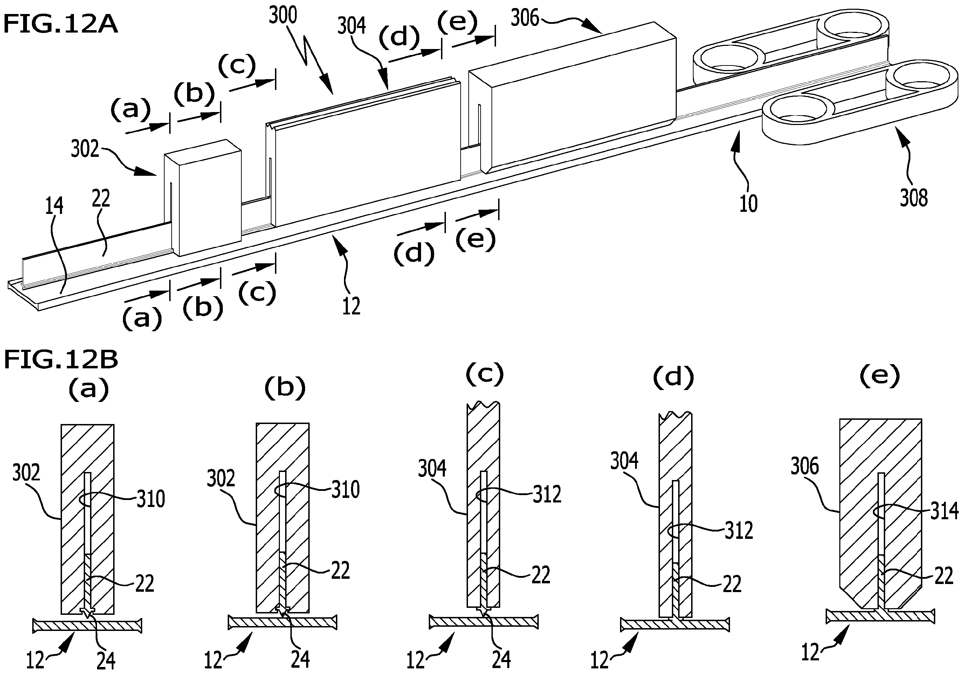

Die Figur 12A zeigt eine Vorrichtung 300 zur Durchführung des erfindungsgemäßen Verfahrens zur Herstellung von Isolierprofilen in einer perspektivischen Ansicht. Hier sind nun auch die erste und die zweite Führungsvorrichtung für die Führungszone und die Haltezone veranschaulicht.

Die Vorrichtung umfasst eine erste Führungsvorrichtung 302 in Form einer Matrize, in der die der Vorrichtung 300 zugeführten Isolierstege 12 und ersten Funktionselemente 22 in einer vorgegebenen Geometrie zueinander gehalten und in Richtung zu der nachfolgenden Schweißzone 304 gefördert werden. Die relative Anordnung von Isoliersteg 12 zu erstem Funktionselement 22 in dieser Phase ist in den Schnittdarstellungen (a) und (b) gezeigt, aus denen auch ersichtlich ist, dass bei der ersten Führungsvorrichtung 302 eine schlitzförmige Ausnehmung 310 vorgesehen ist, in welcher das erste Funktionselement 22 geführt wird.

Vorzugsweise wird bei dieser Ausnehmung 310 der ersten Führungsvorrichtung 302 auch der Kontaktbereich 24 des ersten Funktionselements 22 zu großen Teilen von der Ausnehmung 310 aufgenommen, während der Kontaktbereich 24 an die obere Oberfläche des Isolierstegs 12 sukzessive angenähert wird.

In der der ersten Führungsvorrichtung 302 folgenden Schmelzzone 304, welche einer Sonotrode im Bereich (c) bis (d) entspricht, wird das erste Funktionselement 22 in einer Ausnehmung 312 der Sonotrode 304 geführt, allerdings mit dem Unterschied, dass sich hier der Kontaktbereich 24 des ersten Funktionselements 22 außerhalb des Körpers der Sonotrode 304 befindet, so dass eine ungehinderte Annäherung des Kontaktbereichs 24 an die Oberfläche des Isolierstegs 12 unter Verpressen des Energierichtungsgebers simultan zum kontinuierlichen Ultraschall-Schweißenergieeintrag erfolgen kann, wie dies in der Querschnittsdarstellung (d) am Ende der Schweißzone 304 gezeigt ist.

Nachfolgend zur Schweißzone 304 wird der stoffschlüssig mit dem ersten Funktionselement 22 verbundene Isoliersteg 12 in einer zweiten Führungsvorrichtung 306 in der gewünschten endgültigen Querschnittsgeometrie geführt. Auch hier wiederum ist die Führungsvorrichtung 306 mit einer Ausnehmung 314 versehen, die das erste Funktionselement 22 im Wesentlichen aufnimmt.

Der Körper der Führungsvorrichtung 306 kann, wie hier gezeigt, eine starre Matrize sein, ebenso kann diese auch anders realisiert werden, beispielsweise in Form von Anpressrollen.

Schließlich wird das Isolierprofil 10 nach dem Austritt aus der zweiten Führungsvorrichtung 306 von einer Fördervorrichtung 308 übernommen und aus der Vorrichtung abgezogen.

Die Übergabe der Fügepartner von Führungszone zur Schweißzone im Bereich (b)-(c) sowie die Übergabe des Isolierprofils von der Schweißzone zur Haltezone im Bereich (d)-(e) kann über kurze Strecken von wenigen Millimetern oder wenigen Zentimetern ohne spezielle Führung bzw. ungeführt erfolgen, z.B. über Luftspalte.

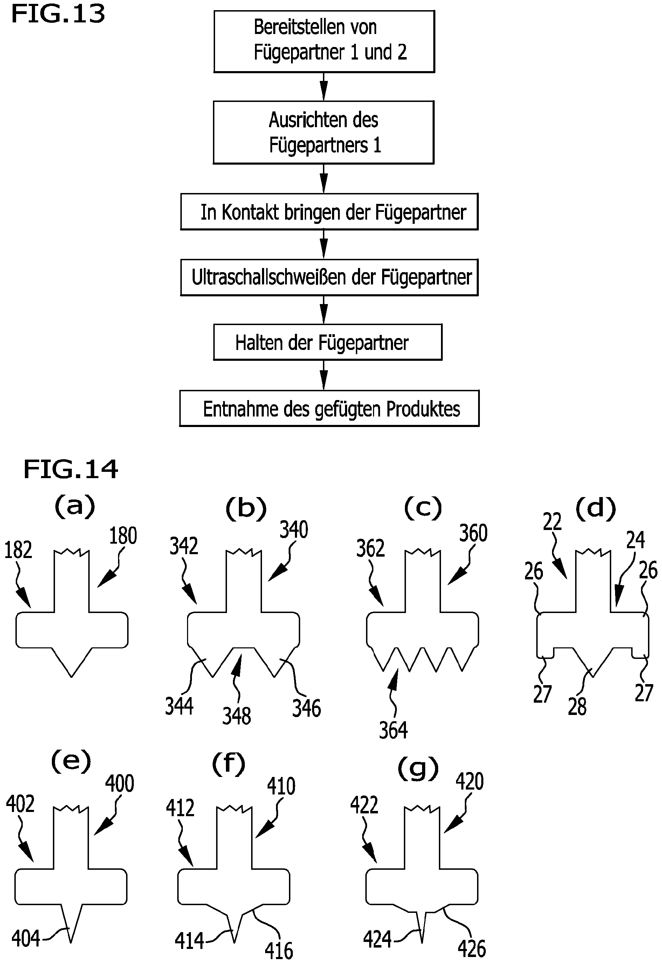

Die einzelnen Verfahrensschritte sind nochmals in Figur 13 in einem Flussdiagramm dargestellt, wobei der Begriff Fügepartner 1 und 2 für den Isoliersteg 12 bzw. das erste Funktionselement 22 steht.

Die typischen Parameter bei der Durchführung des erfindungsgemäßen Verfahrens lassen sich skizzieren wie folgt:
Eine Durchlaufgeschwindigkeit oder auch Abzugsgeschwindigkeit des fertigen Isolierprofils 10 liegt typischerweise im Bereich von ca. 10 m/min oder mehr, wobei auch deutlich höhere Werte realisierbar sind z.B. von ca. 15 m/min oder mehr oder ca. 30 m/min oder mehr.

Die bei den vorgenannten Abzugsgeschwindigkeiten gegebenen Verweildauern der Profilteile in der Schweißzone sind stark werkstoff- und geometrieabhängig und betragen typischerweise ca. 0,2 bis ca. 0,6 sec. Sollte ein höherer Energieeintrag notwendig sein, kann mit etwas geringeren Abzugsgeschwindigkeiten gearbeitet werden (was eine längere Verweildauer ergibt), so dass beim Durchlaufen der Schweißzone ein höherer Energieeintrag (in Bezug auf die Längeneinheit einer Schweißnaht) stattfinden kann. Bei deutlich höheren Abzugsgeschwindigkeiten wird in der Regel eine Verlängerung der Schweißzone, beispielsweise durch das Anfügen weiterer Sonotroden, erforderlich, was sich aber bei dem erfindungsgemäßen Verfahren typischerweise einfach realisieren lässt, wie dies auch beispielsweise aus der perspektivischen Darstellung der Figur 12A ersichtlich ist.

Das Zusammenführen von Isoliersteg und erstem Funktionselement geschieht vorzugsweise durch den Vorschub einerseits und ein geometrisches Annähern der beiden Komponenten Isoliersteg 12 und erstes Funktionselement 22 andererseits, wobei sich die Kraft, mit der die beiden Komponenten gegeneinander gepresst werden, durch die Materialeigenschaften, die vorgegebene Abzugsgeschwindigkeit, die Höhe des Abschmelzelements und die geometrische Kontur der Sonotrode in Laufrichtung des Profils ergibt. Durch die vorgegebene Position einer statischen Sonotrode bzw. deren geometrische Kontur in Laufrichtung des Profils ist ein sogenanntes "Weg-gesteuertes Schweißen" realisiert, dem erfindungsgemäß der Vorzug gegeben wird gegenüber einem Kraft-gesteuerten Schweißen, da so die Toleranzen in engeren Grenzen gehalten werden können.

Die Anpressdauer, d.h. der Zeitraum, in dem das stoffschlüssig verbundene Isolierprofil durch die zweite Führungsvorrichtung geführt und stabilisiert wird, wird anhand der Zeit konzipiert, die notwendig ist, um die Schweißnaht erstarren zu lassen und das Produkt als solches handhabbar zu machen. Typischerweise sind hier Zeitdauern von ca. 0,2 bis ca. 1 sec ausreichend, da die Plastifizierung lokal sehr begrenzt ist und die abzuführende Wärmemenge dadurch relativ gering gehalten werden kann.

In den folgenden Figuren 14 bis 17 wird nochmals der Kontaktbereich des ersten Funktionselements in einer breiten Palette unterschiedlicher Konfigurationen gezeigt und besprochen.

Figur 14 zeigt an erster Stelle (Abbildung (a)) den Kontaktbereich 182 des ersten Funktionselements 180, wie es im Rahmen der Figur 7B schon diskutiert wurde. In der Abbildung (b) der Figur 14 ist ein erstes Funktionselement 340 gezeigt, bei dem ein Kontaktbereich 342 mit zwei abstehenden Vorsprüngen 344, 346 ausgebildet ist, die beide als Energierichtungsgeber fungieren und die zwischen sich einen Hohlraum 348 definieren, in dem zumindest ein Teil der anfallenden Schmelze des Materials der Energierichtungsgeber 344, 346 während des Schweißvorgangs aufgenommen werden kann.

Die Abbildung (c) der Figur 14 zeigt ein erstes Funktionselement 360 mit einem Kontaktbereich 362, an dessen freiem Ende vier im Querschnitt Dreieckförmige Vorsprünge 364 ausgebildet sind, die als Energierichtungsgeber fungieren und die zwischen sich drei Hohlräume bilden, in denen geschmolzenes Material des Kontaktbereichs 362 beim Schweißvorgang aufgenommen werden kann.

Die Abbildung (d) der Figur 14 zeigt wiederum zum Vergleich das erste Funktionselement 22 mit dem Kontaktbereich 24 und dem im Kontaktbereich angeordneten Energierichtungsgeber 28 in Form eines Dreieck-förmigen Vorsprungs. Ergänzend weist der Kontaktbereich 24 - verglichen mit der Ausführungsform der Abbildung (a) der Figur 14 - zwei weitere Vorsprünge 27 auf, die jeweils einen Anschlag bilden und die die Relativposition bzw. die zu erzielende Querschnittsgeometrie des Isolierprofils während der Ausbildung der Schweißverbindung definieren.

Auch hier ist wiederum ein Hohlraumvolumen unterhalb der Schultern 26 beidseits des Energierichtungsgebers 28 vorgesehen, in dem geschmolzenes Material desselben beim Ultraschall-Schweißvorgang aufgenommen werden kann, so dass eine optisch ansprechende Verbindung zwischen dem ersten Funktionselement 22 und einem zugehörigen Isoliersteg erzielt werden kann. Das Hohlraumvolumen wird beiderseits begrenzt durch die Anschlagelemente 27.

Die Abbildung (e) der Figur 14 zeigt eine weitere Alternative eines ersten Funktionselements 400, bei dem ein Kontaktbereich 402 mit einem im Querschnitt Dreieck-förmigen Vorsprung 404 als Energierichtungsgeber ausgestattet ist. Die Querschnittsfläche dieses Energierichtungsgebers 104 ist geringer als die des Energierichtungsgebers 28 der Abbildung (d) oder auch der Energierichtungsgeber 344, 346 der Abbildung (b) der Figur 14.

Hier wird aufgrund des geringeren Volumenanteils, der beim Schweißvorgang verpresst werden kann, typischerweise nicht unbedingt ein Hohlvolumen vorzusehen sein, das die Schmelze aufnimmt, sondern die Schmelze wird sich im Wesentlichen gleichmäßig an der Unterseite des Kontaktbereichs 402 des ersten Funktionselements 400 verteilen. Das entstehende Schmelzevolumen ist hierbei geringer, jedoch sinkt dadurch auch der Energiebedarf, um das Volumen zu plastifizieren, und der Schweißprozess kann somit mit größerer Vorschubgeschwindigkeit ablaufen.

In ähnlicher Weise ist in Abbildung (f) der Figur 14 bei dem dort gezeigten ersten Funktionselement 410 und dessen Kontaktbereich 412 das Volumen des Energierichtungsgebers 414 durch ein kleineres Querschnittsformat geringer konzipiert und somit Vorsorge getroffen, dass schmelzflüssiges Material des Energierichtungsgebers 414 nicht seitlich zu dem Kontaktbereich 412 austreten kann. Darüber hinaus ist der Energierichtungsgeber 414 noch auf einer konisch ausgebildeten Oberflächenstruktur 416 des Kontaktbereichs 412 angeordnet, so dass beidseits des Energierichtungsgebers 414 nach dessen Abschmelzen ein Volumen zwischen dem Kontaktbereich 412 und der Oberfläche des Isolierstegs (hier nicht gezeigt) verbleibt, das die Schmelze des Materials des Energierichtungsgebers 414 problemlos aufnehmen kann.

Eine geringfügig hiervon abgewandelte Variante ist in der Abbildung (g) der Figur 14 anhand eines ersten Funktionselements 420 gezeigt, bei dem ebenfalls der Kontaktbereich 422 neben dem Energierichtungsgeber 424 mit einer konischen Struktur 426 ausgerüstet ist, wobei hier der Querschnitt des Energierichtungsgebers 424 noch geringer gehalten ist als in der Abbildung (f), so dass hier mit höherer Sicherheit die entstehenden Schmelzevolumina zwischen dem Kontaktbereich 422 und einer Oberfläche des Isolierstegs (nicht gezeigt) verbleiben. Das Plateau der konischen Struktur 426 fungiert dabei als eine Art Anschlagselement.

Bei den in den Figuren (f) und (g) gezeigten Geometrien der Kontaktbereiche 412 bzw. 422 ist auch vorstellbar, dass die konischen Vorsprünge 416, 426 so ausgelegt sind, dass anschließend an die Plastifizierung der Fügezone die beim Durchlauf der Schweißzone entstandene Geometrie in einem nachgelagerten Schritt - beispielsweise in einer entsprechend ausgebildeten zweiten Führungsvorrichtung - noch im heißen, plastifizierten Zustand derart verändert wird, dass eine aus der Senkrechten abweichende Neigung des ersten Funktionselements 410, 420 gegenüber der Oberfläche des Isolierstegs (hier nicht gezeigt) erzielt wird.

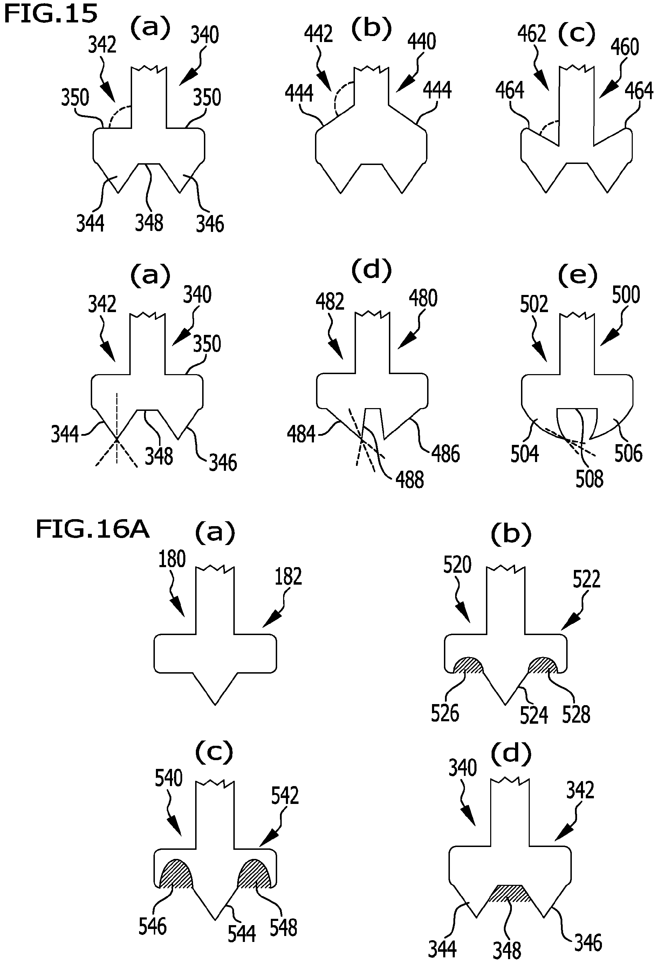

Figur 15 zeigt ebenfalls mehrere Varianten von Kontaktbereichen von ersten Funktionselementen, ausgehend von der schon in Abbildung (b) der Figur 14 gezeigten Variante eines Kontaktbereichs 342. Bei diesem Typ eines Kontaktbereichs sind die von den Schultern 350 gebildeten Anlageflächen für die Sonotrode im Wesentlichen rechtwinklig zu der Krafteinleitungsebene angeordnet und ermöglichen eine sichere und definierte Führung der ersten Funktionselemente im Bereich der Schmelzzone.

Bei der Variante der Abbildung (b) der Figur 15 weist das erste Funktionselement 440 einen Kontaktbereich 442 auf, bei dem die Schultern Kontaktflächen für die Sonotrode bilden, die einen stumpfen Winkel zur Krafteinleitungsebene einnehmen. Eine solche Ausgestaltung des Kontaktbereichs stabilisiert einerseits die Geometrie des Kontaktbereichs, insbesondere bei der Einleitung hoher Kräfte über die Sonotrode, andererseits erfordert sie eine Anpassung der Sonotrode, so dass die Bereiche, die mit den Schultern in Kontakt stehen und die Kraft auf den Kontaktbereich einleiten, beim Schweißvorgang ihre Geometrie in ausreichendem Maße beibehalten und eine gezielte Krafteinleitung gewährleisten.

Letzterem Problem begegnet insbesondere die Ausgestaltung des Kontaktbereichs 462 des ersten Funktionselements 460, bei dem die von den Schultern 464 gebildeten Kontaktflächen einen spitzen Winkel gegenüber der Krafteinleitungsebene aufweisen. Hier findet eine Zentrierung der Sonotrodenspitzen, die in Kontakt mit den Kontaktflächen treten, statt, so dass bei deren Ausgestaltung ein größerer konstruktiver Spielraum gegeben ist und trotzdem eine sichere, gezielte und definierte Krafteinleitung möglich ist.

Eine Auslegung von Sonotroden zur optimalen Krafteinleitung ist möglich, indem der/die vorgenannte(n) Winkel der Schulter(n) eines Funktionselements in der Sonotrodenform korrespondierend abgebildet werden. Wichtig dabei ist jedoch, generell auf ein ausreichend gutes Schwingverhalten der Sonotrode zu achten.

In den weiteren Varianten eines Kontaktbereichs der ersten Funktionselemente sind die als Energierichtungsgeber ausgebildeten Vorsprünge der Kontaktbereiche in ihrer Geometrie variiert und wiederum im Vergleich zu der Ausführungsform des ersten Funktionselements 340 dargestellt (Abbildung (a)).

Die in der Abbildung (d) der Figur 15 gezeigte Variante eines ersten Funktionselements 480 weist in ihrem Kontaktbereich 482 zwei Vorsprünge 484 und 486 auf, deren Spitzen geringfügig gegeneinander gerichtet sind. Zwischen den Vorsprüngen 484 und 486 verbleibt ein ausreichendes Volumen 488 zur Aufnahme von Schmelze beim Ultraschall-Schweißvorgang, während darüber hinaus die Geometrie der Vorsprünge dem Schmelzefluss eine Präferenz in Richtung zum Volumen 488 aufprägt. Die Tendenz, dass Schmelze unerwünscht seitlich des Kontaktbereichs sichtbar austritt, wird dadurch gegenüber der Variante der Abbildung (a) der Figur 15 weiter vermindert.

Ein noch stärkerer Effekt zur Steuerung des Schmelzeflusses in Richtung des vorgegebenen Volumens zwischen den Vorsprüngen wird bei der Konfiguration eines ersten Funktionselements 500 gemäß Abbildung (e) der Figur 15 erzielt. Bei diesem ersten Funktionselement 500 sind die Vorsprünge 504, 506 des Kontaktbereichs 502 gegeneinander gekrümmt und umschließen partiell das Volumen 508 zwischen den Vorsprüngen.

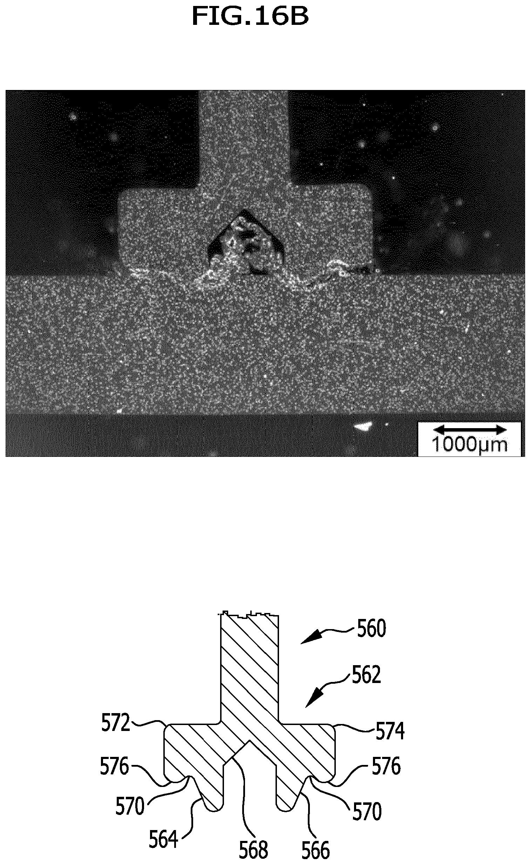

Ein anderer Aspekt der Ausgestaltung des Kontaktbereichs eines ersten Funktionselements soll im Zusammenhang mit den Figuren 16A und 16B diskutiert werden. Verglichen mit dem Ausführungsbeispiel (a), das der Ausführungsform der Figur 14 (a) entspricht, sind die Ausführungsformen der Abbildungen (b), (c) und (d) jeweils im Kontaktbereich mit einem Volumen zur Aufnahme von Schmelze ausgestattet, welches bevorzugt um ca. 5 bis ca. 50 % größer als das beim Schweißvorgang anfallende und zu verdrängende Schmelzevolumen dimensioniert wird. Weiter bevorzugt ist das Volumen ca. 5 bis 30 % größer, beispielsweise 20 % größer.

In der Abbildung (b) der Figur 16A ist ein erstes Funktionselement 520 gezeigt, welches einen T-förmig gestalteten Kontaktbereich 522 aufweist, bei dem ein mittig angeordneter Vorsprung 524 als Energierichtungsgeber mit einem im Wesentlichen Dreieck-förmigen Querschnitt ausgebildet ist. In dem Kontaktbereich sind auf Seiten des Vorsprungs 524 beidseits Volumina 526, 528 vorgesehen (schraffiert dargestellt), die die beim Ultraschallschweißen zu verdrängenden Anteile des Polymerwerkstoffs des Vorsprungs 524 aufnehmen können.

Im Ausführungsbeispiel (c) der Figur 16A weist das erste Funktionselement 540 einen T-förmigen Kontaktbereich 542 auf, bei dem ebenfalls ein einzelner Vorsprung 544 als Energierichtungsgeber fungiert. Wiederum sind beidseits des Vorsprungs 544 Ausnehmungen 546, 548 vorgesehen, die Volumina der beim Ultraschallschweißen entstehenden und zu verdrängenden Schmelze aufnehmen können. Die Volumina 546, 548 sind deutlich größer als die Volumina 526, 528 der in Abbildung (b) gezeigten Ausführungsform, wobei allerdings bei gleicher Dimensionierung des Kontaktbereichs deutlich geringere Wandstärken mit einer entsprechend geringeren Festigkeit bei der Verwendung identischer Polymerwerkstoffe in der T-förmigen Struktur verbleiben.

Zum weiteren Vergleich ist als Abbildung (d) das erste Funktionselement 340 der Figur 15 (a) gezeigt, bei welchem das Volumen 348 zur Aufnahme von Schmelze zwischen zwei parallel verlaufenden Vorsprüngen 344, 346 angeordnet ist. Das Volumen 348 ist hier etwas geringer dimensioniert als bei der Ausführungsform der Abbildung (b), jedoch ist die mechanische Stabilität des Kontaktbereichs 342 des ersten Funktionselements 340 höher als bei dem ersten Funktionselement 520. Da hier, wie beispielsweise auch bei Variante 180, keine ausgewiesenen Anschlagsbegrenzungen vorliegen, hängt das erzeugte Schmelzevolumen von der Abschmelzhöhe ab. Aus diesem Grund ist bei diesem und ähnlich gelagerten Fällen eine exakte Kontrolle der Abschmelzhöhe, z.B. durch eine Weg-gesteuerte Prozessführung des Schweißprozesses, sinnvoll.

Figur 16B zeigt schließlich im Schliffbild eine besonders bevorzugte Ausführungsform eines ersten Funktionselements 560 zusammen mit einer zeichnerischen Darstellung derselben. Im Schliffbild ist erkennbar, wie die Schmelze des Polymerwerkstoffs der Vorsprünge 564, 566 von dem Volumen 568 aufgenommen wird, welches größer dimensioniert ist als das zu erwartende Schmelzevolumen. Zusätzlich sind neben den Vorsprüngen 564, 566 rinnenartige Vertiefungen 570 vorgesehen, die geringe, eventuell seitlich austretende Schmelzvolumina aufnehmen können und so sicherstellen, dass ein optisch optimales Ergebnis der stoffschlüssigen Verbindung von erstem Funktionselement und dem damit verbundenen Isoliersteg erhalten wird.

Die rinnenartigen Vertiefungen 570 werden an des Außenseiten des Kontaktbereichs 562 durch rippenförmige Vorsprünge 576 begrenzt, die jeweils ein Anschlagelement bilden, so dass das erste Funktionselement 560 in eine definierte Position und Ausrichtung gegenüber der Oberfläche des Isolierstegs (nicht gezeigt) gebracht werden kann. Zudem wird damit ein unbeabsichtigtes zu starkes Verformen des Kontaktbereichs 562 vermieden.

Bei diesem ersten Funktionselement 560 wird neben einer hohen mechanischen Stabilität des Kontaktbereichs 562 einschließlich dessen Schultern 572, 574 ein vergleichsweise großes Volumen zur Aufnahme von Schmelze bereitgestellt und zusätzlich Vorsorge getroffen, dass auch seitlich kaum bzw. keine Schmelzeanteile des Polymerwerkstoffs der Vorsprünge 564, 566 sichtbar austreten können.

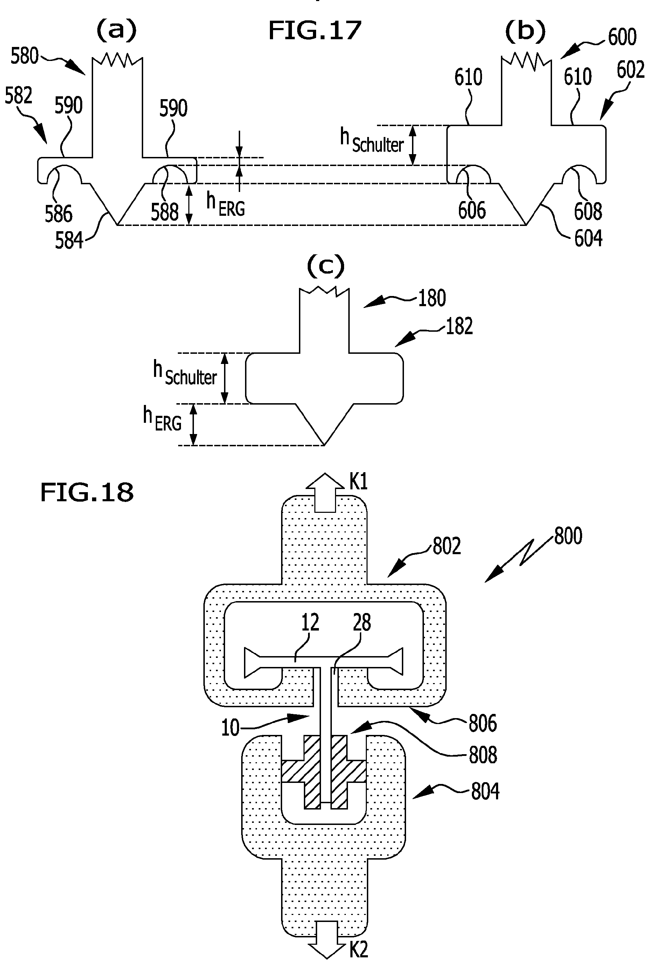

Die Überlegungen zur Konzeption eines Kontaktbereichs eines ersten Funktionselements sind in Figur 17 nochmals illustriert.

Als Referenz ist nochmals als Abbildung (c) das erste Funktionselement 180 mit seinem Kontaktbereich 182 eingeblendet.
Bei den Varianten (a) und (b) der ersten Funktionselemente 580, 600 sind in dem T-förmigen Kontaktbereich 582 bzw. 602 mit den Vorsprüngen 584 bzw. 604 beidseits der Vorsprünge 584, 604 Volumina 586, 588 bzw. 606, 608 mit vergleichbarer Größe vorgesehen. In der Ausführungsform des ersten Funktionselements 600 wird der Schwächung der Schultern 610 durch eine größere Höhe h_{Schulter} dieser Teile des Kontaktbereichs 602 Rechnung getragen, so dass die Schultern des Kontaktbereichs 602 des ersten Funktionselements 600 in ähnlicher Weise wie die Schultern des Kontaktbereichs 182 des ersten Funktionselements 180 belastet werden können. Bei dem ersten Funktionselement 580 muss darauf geachtet werden, dass hier nur geringere Kräfte im Bereich der Schultern 590 appliziert werden dürfen, um eine Verformung oder sogar eine Beschädigung des Kontaktbereichs 582 zu vermeiden. Bei den beiden als Abbildungen (a) und (b) in der Figur 17 wiedergegebenen Ausführungsformen eines ersten Funktionselements 580, 600 fungieren die seitlichen Vorsprünge, die die Volumina zur Aufnahme von Schmelze limitieren, auch gleichzeitig als Anschlagelemente.

Im Rahmen der Beschreibung verschiedener Ausführungsformen der erfindungsgemäßen Isolierprofile wurde schon darauf hingewiesen, dass die Kontaktzone, die bei der stoffschlüssigen Verbindung von Isoliersteg und erstem Funktionselement ausgebildet wird, je nach Anwendung bzw. Einsatzzweck der erfindungsgemäßen Isolierprofile unterschiedlich groß ausgebildet werden kann. Wichtig ist dabei allerdings, dass eine ausreichende mechanische Festigkeit der Verbindung zwischen dem Isoliersteg und dem ersten Funktionselement erzielt wird, so dass das erfindungsgemäße Isolierprofil sicher gehandhabt und verarbeitet werden kann.

Zur Charakterisierung der Festigkeit der Verbindung und deren damit einhergehender mechanischer Belastbarkeit eignet sich ein Test, der im Rahmen der Figur 18 näher beschrieben werden soll.

Figur 18 zeigt eine Prüfvorrichtung 800, die in einer herkömmlichen Universalprüfmaschine zur Bestimmung von Zugbelastungsgrenzen von Bauteilen verwendet werden kann.

Die exemplarische Prüfvorrichtung 800 ist ausgelegt für einfache Profile mit senkrecht abstehender Fahne; in diesem Fall liegt bei einer Prüfung eine Zugkraft senkrecht zum Profilkörper an der Fahne an. Es ist aber auch möglich, Prüfvorrichtungen für andere Profilgeometrien auszulegen und ggf. auch andere Wirkrichtungen der Krafteinleitung zu berücksichtigen, sofern dies zweckmäßig ist, um Aussagen über die Fügezone und die Qualität der Verbindung der Fügepartner zu erhalten.

Die Prüfvorrichtung 800 umfasst eine obere Prüfkörperaufnahme 802 sowie eine untere Prüfkörperaufnahme 804. In der oberen Prüfkörperaufnahme 802 ist eine zweigeteilte Prüfkörperauflage 806 ausgebildet, auf der ein erfindungsgemäßes Isolierprofil 10 (z.B. in Form eines sorgfältig abgelängten Isolierprofils als Prüfkörper mit einer Länge von 20 mm bis 50 mm) mit seinem Isoliersteg 12 aufgelegt werden kann, wobei dessen erstes Funktionselement 22 durch einen Spalt zwischen den beiden Teilen der Prüfkörperauflage 806 hindurchtreten kann. Die Darstellung des Isolierprofils 10 ist in der Figur 18 etwas vereinfacht und zeigt nicht alle Details, die in Figur 1 zu sehen sind.

Die untere Prüfkörperaufnahme 804 umfasst ein Paar Klemmbacken 808, in die sich ein Abschnitt des ersten Funktionselements 22 einspannen lässt.

Bei der Zugprüfung wird in Richtung der Pfeile K1 und K2 eine Kraft auf die Fügezone 28 des Isolierprofils 10 ausgeübt, die kontinuierlich gesteigert wird, bis ein Abriss des ersten Funktionselements von dem Isoliersteg 12 erfolgt. Die Parameter der Zugprüfung können angepasst werden, um den Werkstoffen entsprechend aussagekräftige Ergebnisse zu erhalten; üblicherweise wird diese Zugprüfung mit einer Geschwindigkeit von 1 mm/min, 5 mm/min oder 10 mm/min durchgeführt. Die ermittelte Kraft bis zum Versagen des Prüfkörpers wird dann auf die Länge des Probenkörpers des Isolierprofils normiert. Es muss dabei sichergestellt werden, dass bei der Messung die zu untersuchende Fügezone vollflächig und in einer sinnvollen Richtung, z.B. mit Normalkraft, belastet wird. Erfindungsgemäße Isolierprofile weisen dann Festigkeiten auf von ca. 2 N/mm oder mehr, bevorzugt ca. 5 N/mm oder mehr, besonders bevorzugt ca. 10 N/mm oder mehr.

Bei vielen der obigen Ausführungsbeispiele erfindungsgemäßer Isolierprofile sind als erste Funktionselemente streifenförmige, plane sogenannte Fahnen im Einsatz. Während diese Art von ersten Funktionselementen vielfältig zum Einsatz kommt, lassen sich diese jedoch bei Bedarf gegen wesentlich komplexer strukturierte erste Funktionselemente austauschen.

Ebenso kann der Profilkörper des Isolierstegs selbst bereits beliebig komplex sein. Es können viele bisher bekannte Profilgeometrien aus dem Stand der Technik, insbesondere bereits kommerzialisierte Profile, als Basis dienen, um gemäß dem erfindungsgemäßen Verfahren mit weiteren Funktionselementen ausgerüstet zu werden.

## Patentansprüche

1. Verfahren zur Herstellung eines Isolierprofils (10; 30), insbesondere für die Herstellung von Fenster-, Türen- und Fassadenelementen, wobei das Isolierprofil (10; 30) einen aus einem ersten Polymerwerkstoff gefertigten Isoliersteg (12) umfasst, welcher einen Profilkörper (14) sowie ein erstes Funktionselement (22; 32) umfasst, welche sich in Längsrichtung des Isolierprofils (10; 30) erstrecken, wobei das erste Funktionselement (22; 32) in einem Kontaktbereich mit dem Isoliersteg (12) stoffschlüssig verbunden ist,
wobei in einem ersten Schritt sowohl der Profilkörper (14) als auch das erste Funktionselement (22; 32) jeweils separat gefertigt und bereitgestellt werden, **dadurch gekennzeichnet, dass**
in einem nachgelagerten zweiten Schritt der Profilkörper (14) und das erste Funktionselement (22; 32) in Längsrichtung des zu bildenden Isolierstegs (12) einer Ultraschall-Schweißvorrichtung (200) zugeführt werden,
in welcher der Profilkörper (14) und das Funktionselement (22; 32) unter Ausbildung einer Schweißverbindung stoffschlüssig miteinander verbunden werden, wobei die Ultraschall-Schweißvorrichtung (200) eine mit einer Sonotrode (204) ausgerüstete Schweißzone umfasst, wobei die Sonotrode (204) eine Ausnehmung aufweist, in welcher das Funktionselement (22; 32) während der Ausbildung der Schweißverbindung geführt wird,
und dass der Profilkörper (14) und das Funktionselement (22; 32) während der Ausbildung der Schweißverbindung zu einer vorgegebenen ersten Querschnittsgeometrie, senkrecht zur Längsrichtung gesehen, zusammengeführt werden und danach in der vorgegebenen ersten Querschnittsgeometrie oder gegebenenfalls in einer von der ersten Querschnittsgeometrie abweichenden vorgegebenen zweiten Querschnittsgeometrie, senkrecht zur Längsrichtung gesehen, geführt werden, bis das Kunststoffmaterial der Schweißverbindung soweit erstarrt ist, dass der Profilkörper (14) und das erste Funktionselement (22; 32) in der vorgegebenen Querschnittsgeometrie fixiert sind.

2. Verfahren nach Anspruch 1, wobei der Profilkörper (14) und das erste Funktionselement (22; 32) kontinuierlich oder intermittierend der Ultraschall-Schweißvorrichtung zugeführt werden; und/oder
wobei der Profilkörper (14) und/oder das erste Funktionselement (22; 32) als Endlosmaterial oder als Stangenware bereitgestellt werden.

3. Verfahren nach Anspruch 1 oder 2, wobei der Profilkörper (14) und das Funktionselement (22; 32) vor dem Durchlaufen der Schweißzone mittels einer ersten Führungsvorrichtung in einer vorgegebenen, gegebenenfalls veränderlichen Relativposition zueinander positioniert und in der Längsrichtung geführt werden; und/oder
wobei der Profilkörper (14) und das Funktionselement (22; 32) nach dem Durchlaufen der Schweißzone mittels einer zweiten Führungsvorrichtung in einer vorgegebenen, gegebenenfalls veränderlichen Relativposition zueinander positioniert und in der Längsrichtung geführt werden; und/oder
wobei der Profilkörper (14) und das Funktionselement (22; 32) beim Durchlaufen der Schweißzone und beim Durchlaufen einer optional zweiten Führungsvorrichtung im Anschluss an die Schweißzone mit einer jeweils vorgegebenen Kraft gegeneinander gepresst werden.

4. Verfahren nach einem der Ansprüche 1 bis 3, wobei das erste Funktionselement (32) mit einem oder mehreren Abschmelzelement(en) (36) gefertigt wird, welche(s) sich als Vorsprung von einer Oberfläche des Kontaktbereichs des ersten Funktionselements (32) weg erstreckt/erstrecken, wobei sich der Vorsprung oder die Vorsprünge bevorzugt ca. 3 mm oder weniger, weiter bevorzugt ca. 1,5 mm oder weniger, von der Oberfläche weg erstreckt/erstrecken.

5. Verfahren nach einem der Ansprüche 1 bis 4, wobei der Profilkörper (14) und das erste Funktionselement (22; 32) einander unter einem spitzen Winkel bezüglich der Längsrichtung zugeführt werden, wobei sich die Führung unter einem spitzen Winkel zumindest über Teilbereiche der Schweißzone und gegebenenfalls der ersten Führungsvorrichtung und/oder der zweiten Führungsvorrichtung erstreckt.

6. Verfahren nach einem der Ansprüche 1 bis 5, wobei das Ultraschallschweißen als Nahfeldschweißen durchgeführt wird, wobei die Sonotrode einen direkten Kontakt zum ersten Funktionselement aufweist und wobei vorzugsweise die Sonotrode mit einem maximalen Abstand von ca. 6 mm oder weniger zum Profilkörper angeordnet ist; und/oder
wobei die Schweißzone eine Länge von ca. 5 cm bis ca. 50 cm aufweist und gegebenenfalls mehr als eine Sonotrode aufweist; und/oder
wobei in der Schweißzone die Sonotrode(n) bezogen auf die Längsrichtung zum Profilkörper (14) unterschiedliche Winkelpositionen einnimmt/einnehmen, wobei die Winkelpositionen kontinuierlich und/oder stufenweise variieren und dadurch der Abstand der Sonotrode(n) zur Oberfläche des Isolierstegs in Durchlaufrichtung vermindert wird; und/oder
wobei die Schweißzone mindestens eine statische Sonotrode umfasst, wobei die statische Sonotrode insbesondere als Schleifsonotrode ausgebildet wird.

7. Verfahren nach einem der Ansprüche 1 bis 6, wobei das erste Funktionselement (22; 32) im Kontaktbereich mit einer Schulter ausgebildet wird, welche im Bereich der Schweißzone in Kontakt mit der oder den Sonotrode(n) steht.

8. Verfahren nach einem der Ansprüche 1 bis 7, wobei das Isolierprofil (10; 30) mit einer Geschwindigkeit von ca. 5 m/min oder mehr, bevorzugt von ca. 10 m/min oder mehr, in der Schweißzone in Längsrichtung gefördert wird; und/oder
wobei die Verweildauer des Profilkörpers (14) und des ersten Funktionselements (22; 32) in der Schweißzone ca. 100 bis ca. 1000 msec, bevorzugt ca. 200 bis ca. 800 msec beträgt;
wobei die Sonotrode (204) kontinuierlich betrieben wird.

9. Verfahren nach Anspruch 7 oder 8, wobei die Sonotrode (204) mit einer schlitz- oder spaltförmigen Ausnehmung ausgebildet ist, derart, dass zwei parallel angeordnete Endbereiche der Sonotrode (204) gebildet werden, welche mit dem Kontaktbereich des ersten Funktionselements (22; 32) beim Ausbilden der Schweißverbindung in Kontakt stehen.

10. Verfahren nach einem der Ansprüche 1 bis 9, wobei das Funktionselement (22; 32) an dem mit dem Profilkörper (14) zu verbindenden Kontaktbereich mit einem oder mehreren als Energierichtungsgeber ausgeformten Vorsprüngen ausgebildet ist, wobei der Vorsprung oder die Vorsprünge insbesondere als Abschmelzelement(e) ausgebildet ist/sind; und
wobei insbesondere das Funktionselement benachbart zu dem Vorsprung oder den Vorsprüngen mit einem oder mehreren Anschlagselementen versehen ist, welche(s) beim Zusammenführen von Funktionselement und Profilkörper die zu erzielende Querschnittsgeometrie definiert/definieren, wobei der Vorsprung oder die Vorsprünge vorzugsweise auch mit der Funktion als Schulter ausgebildet ist/sind.

11. Verfahren nach einem der Ansprüche 1 bis 10, **dadurch gekennzeichnet, dass** die stoffschlüssige Verbindung zwischen dem oder den ersten Funktionselement(en) (22; 32) und dem Profilkörper (14) entlang der Längsrichtung des Isolierprofils kontinuierlich, abschnittsweise oder punktuell erfolgt; und/oder
wobei neben dem Profilkörper (14) auch die Funktionselemente (22; 32) als Endlosmaterial bereitgestellt werden und nach der Herstellung der stoffschlüssigen Verbindung derselben das Isolierprofil auf eine vorgegebene Länge abgelängt wird, vorzugsweise durch einen Schneide- oder Stanz- oder Fräsprozess; und
wobei insbesondere die Endlosmaterialien auf Rollen, Spulen oder Haspeln bereitgestellt werden,
wobei optional der Profilkörper (14) und/oder die Funktionselemente (22; 32) vor der Herstellung der stoffschlüssigen Verbindung in Form von Stangenware bereitgestellt wird/werden.

12. Isolierprofil (10; 30), hergestellt nach einem Verfahren gemäß einem der Ansprüche 1 bis 11, wobei der Profilkörper (14) einen sich in Längsrichtung des Isolierprofils (10; 30) erstreckenden Bereich aufweist, der im Wesentlichen plan ausgebildet ist.

13. Isolierprofil (10; 30) nach Anspruch 12, wobei der Profilkörper (14) in vorgegebenen, insbesondere regelmäßigen, Abständen Durchgangsöffnungen aufweist; und/oder
wobei der Isoliersteg (12) mit mindestens einem Randabschnitt (20) ausgebildet ist, welcher ein Verbindungselement umfasst, wobei das Verbindungselement insbesondere die Form eines Einrollkopfes zur Verbindung mit Metallprofilen aufweist.

14. Isolierprofil (10; 30) nach Anspruch 12 oder 13, wobei die stoffschlüssige Schweißverbindung zwischen dem Profilkörper (14) und dem ersten Funktionselement (22; 32) eine Festigkeit von ca. 2 N/mm oder mehr, bevorzugt ca. 5 N/mm oder mehr, besonders bevorzugt ca. 10 N/mm oder mehr, aufweist; und/oder
wobei der Isoliersteg integral mit dem Profilkörper ausgebildete zweite und gegebenenfalls weitere Funktionselemente umfasst; und/oder
wobei das oder die ersten Funktionselement(e) (22; 32) ausgewählt ist/ sind aus im Querschnitt planaren, gebogenen, insbesondere teilkreisförmigen, verzweigt oder abgewinkelt ausgebildeten Flächenelementen und/ oder einen Hohlraum oder mehrere Hohlräume umschließenden Elementen, wobei das oder die Funktionselement(e) bevorzugt einen im Querschnitt zur Längsrichtung T-förmigen, pfeilförmigen oder hakenförmigen Abschnitt aufweist/aufweisen.

15. Isolierprofil (10; 30; 150) nach einem der Ansprüche 12 bis 14, wobei das oder die ersten Funktionselement(e) eine Vielzahl an Hohlräumen, die gegebenenfalls geschlossen sind, in Längsrichtung des Isolierprofils bildet/ bilden, wobei die Hohlräume insbesondere aneinandergereiht ausgebildet sind; und/oder
wobei der Profilkörper (14) und das oder die ersten Funktionselement(e) (22; 32) aus einem schweißbaren Polymermaterial hergestellt ist/sind, welches bevorzugt auf einem thermoplastischen Polymer basiert, welches ausgewählt ist aus Polyamiden, Polyestern, Polyolefinen, Polyketonen, Vinylpolymeren, Polyether, Polycarbonat, Polyphenylensulfid und deren Copolymeren oder Blends dieser Materialien;
wobei optional das Polymermaterial des oder der ersten Funktionselemente(s) (22; 32) so ausgewählt ist, dass es mit dem Polymermaterial des Profilkörpers (14) kompatibel ist.

16. Isolierprofil (10; 30) nach einem der Ansprüche 12 bis 15, wobei die Oberfläche und/oder ein Kern des oder der ersten Funktionselemente(s) teilweise Metall-beschichtet oder metallisiert oder metallisch ausgerüstet ist; und/oder
wobei das Polymermaterial des Profilkörpers (14) und/oder des ersten Funktionselements (22; 32) faserverstärkt, insbesondere Glasfaser-verstärkt, ist.

## Claims

1. Method for the production of an insulating profile (10; 30), in particular for the production of window, door and facade elements, wherein the insulating profile (10; 30) comprises an insulating bar (12) manufactured from a first polymer material which comprises a profile body (14) as well as a first functional element (22; 32) that extend in the longitudinal direction of the insulating profile (10; 30), wherein the first functional element (22; 32) is connected in a contact region to the insulating bar (12) by a material bond,
wherein, in a first step, both the profile body (14) and the first functional element (22; 32) are each manufactured and provided separately, **characterized in that**
in a second step downstream thereof, the profile body (14) and the first functional element (22; 32) are supplied in the longitudinal direction of the insulating bar (12) that is to be formed to an ultrasonic welding device (200) in which the profile body (14) and the functional element (22; 32) are connected to one another by a material bond by the formation of a welded joining, wherein the ultrasonic welding device (200) comprises a welding zone that is equipped with a sonotrode (204), wherein the sonotrode (204) has a recess in which the functional element (22; 32) is guided during the formation of the welded joining,
and **in that**, during the formation of the welded joining, the profile body (14) and the functional element (22; 32) are brought together into a predetermined first cross-sectional geometry as seen perpendicularly to the longitudinal direction and thereafter are guided with the predetermined first cross-sectional geometry or, if applicable, with a predetermined second cross-sectional geometry that differs from the first cross-sectional geometry, as seen perpendicularly to the longitudinal direction, until the plastics material of the welded joining has solidified to such an extent that the profile body (14) and the first functional element (22; 32) are fixed with the predetermined cross-sectional geometry.

2. Method in accordance with claim 1, wherein the profile body (14) and the first functional element (22; 32) are supplied continuously or intermittently to the ultrasonic welding device; and/or
wherein the profile body (14) and/or the first functional element (22; 32) are provided in the form of a continuous material or in the form of bar stock.

3. Method according to claim 1 or 2, wherein, before going through the welding zone, the profile body (14) and the functional element (22; 32) are positioned relative to each other by means of a first guidance device in a predetermined, optionally variable relative position and fed in the longitudinal direction; and/or
wherein, after going through the welding zone, the profile body (14) and the functional element (22; 32) are positioned relative to each other in a predetermined, optionally variable relative position by means of a second guidance device and fed in the longitudinal direction; and/or
wherein the profile body (14) and the functional element (22; 32) are pressed against each other with a respectively predetermined force when going through the welding zone and when going through an optional second guidance device following the welding zone.

4. Method according to claim 1 to 3, wherein the first functional element (32) is manufactured with one or more fusible elements (36) which extend in the form of a projection away from a surface of the contact region of the first functional element (32), wherein the projection or the projections preferably extends/extend approx. 3 mm or less, more preferably approx. 1.5 mm or less away from the surface.

5. Method according to any one of claims 1 to 4, wherein the profile body (14) and the first functional element (22; 32) are fed towards each other at an acute angle with respect to the longitudinal direction, wherein the guidance extends at an acute angle at least over subregions of the welding zone and, if applicable, the first guidance device and/or the second guidance device.

6. Method according to any one of claims 1 to 5, wherein the ultrasonic welding is carried out as a near field welding process, wherein the sonotrode has a direct contact with the first functional element and wherein the sonotrode is preferably arranged at a maximum spacing of approx. 6 mm or less from the profile body; and/or
wherein the welding zone has a length of approx. 5 cm to approx. 50 cm and, optionally, comprises more than one sonotrode; and/or
wherein, in the welding zone, the sonotrode(s) adopts/adopt different angular positions relative to the profile body taken with reference to the longitudinal direction, wherein the angular positions vary continuously and/or in a step-like manner and the spacing of the sonotrode(s) with respect to the surface of the insulating bar is thereby decreased in the throughput direction; and/or
wherein the welding zone comprises at least one static sonotrode, wherein the static sonotrode is in the form in particular of a grinding sonotrode.

7. Method according to any one of claims 1 to 6, wherein the first functional element (22; 32) is formed in the contact region with a shoulder which is in contact with the sonotrode or the sonotrodes in the region of the welding zone.

8. Method according to any one of claims 1 to 7, wherein the insulating profile (10; 30) is advanced in the longitudinal direction in the welding zone at a speed of approx. 5 m/min or more, preferably of approx. 10 m/min or more; and/or
wherein the period for which the profile body (14) and the first functional element (22; 32) dwell in the welding zone amounts to approx. 100 to approx. 1000 msec., preferably approx. 200 to approx. 800 msec.;
wherein the sonotrode (204) is operated continuously.

9. Method according claim 7 or 8, wherein the sonotrode (204) is formed with a slot-like or slit-like recess in such a manner that there are formed two parallel end regions of the sonotrode (204) which are in contact with the contact region of the first functional element (22; 32) during the formation of the welded joining.

10. Method according to any one of claims 1 to 9, wherein the functional element (22; 32) is formed on the contact region that is to be connected to the profile body (14) with one or more projections which are in the form of energy directors, wherein, in particular, the projection or the projections is/are formed as fusible element(s); and in particular
wherein the functional element is provided neighboring the projection or the projections with one or more stop elements which defines/define the cross-sectional geometry that is sought when the functional element and the profile body are brought together, preferably wherein the projection or the projections is/are also formed with the function as shoulders.

11. Method according to any one of claims 1 to 10, **characterized in that** the connection between the first functional element (22; 32) or the first functional elements (22; 32) and the profile body (14) by a material bond is effected along the longitudinal direction of the insulating profile continuously, in sections or in a point-like manner; and/or
wherein apart from the profile body (14), the functional elements (22; 32) are also provided in the form of continuous material and, after the production of the connection thereof by a material bond, the insulating profile is cut to a predetermined length, preferably by a cutting or punching or milling process; and in particular
wherein the continuous materials are provided on rollers, spools or reels, optionally
wherein, before the production of the connection by a material bond, the profile body (14) and/or the functional elements (22; 32) is/are provided in the form of bar stock.

12. Insulating profile (10; 30) produced in accordance with a method according to any one of claims 1 to 11, wherein the profile body (14) comprises a region extending in the longitudinal direction of the insulating profile (10; 30) which is formed substantially planar.

13. Insulating profile (10; 30) in accordance with claim 12, wherein the profile body (14) comprises through-openings having predetermined and in particular regular spacings; and/or
wherein the insulating bar (12) is formed with at least one rim section (20) which comprises a connecting element, wherein the connecting element takes the form in particular of a roll-in head for connection to metal profiles.

14. Insulating profile (10; 30) according to claim 12 or 13, wherein the welded joining in the form of a material bond between the profile body (14) and the first functional element (22; 32) exhibits a strength of approx. 2 N/mm or more, preferably approx. 5 N/mm or more, particularly preferred, approx. 10 N/mm or more; and/or
wherein the insulating bar comprises second and optionally further functional elements formed integrally with the profile body; and/or
wherein the first functional element (22; 32) or the first functional elements (22; 32) is/are selected from panel elements which are formed such as to be planar, curved, in particular part-circular, branched or bent in cross section and/or elements enclosing a cavity or a plurality of cavities, wherein the functional element or the functional elements preferably comprises/comprise a section which is T-shaped, arrow-like or hook-like in cross section relative to the longitudinal direction.

15. Insulating profile (10; 30; 150) according to any one of claims 12 to 14, wherein the first functional element or the first functional elements forms/form a plurality of cavities, which are optionally closed, in the longitudinal direction of the insulating profile, wherein in particular, the cavities are formed successively in a line; and/or
wherein the profile body (14) and the first functional element (22; 32) or the first functional elements (22; 32) is/are produced from a weldable polymer material that is preferably based on a thermoplastic polymer which is selected from polyamides, polyesters, polyolefins, polyketones, vinyl polymers, polyethers, polycarbonates, polyphenylene sulfides and their copolymers or blends of these materials; optionally
wherein the polymer material of the first functional element (22; 32) or the first functional elements (22; 32) is selected such that it is compatible with the polymer material of the profile body (14).

16. Insulating profile (10; 30) according to any one of claims 12 to 15, wherein the surface and/or a core of the first functional element or the first functional elements is partly metal-coated or metalized or metallically treated; and/or
wherein the polymer material of the profile body (14) and/or the first functional element (22; 32) is fiber-reinforced, in particular, glass fiber reinforced.

## Revendications

1. Procédé de fabrication d'un profilé isolant (10 ; 30), en particulier pour la fabrication d'éléments de fenêtre, de porte et de façade, où le profilé isolant (10 ; 30) comprend une bande isolante (12) produite à partir d'un premier matériau polymère, qui comprend un corps profilé (14) et un premier élément fonctionnel (22 ; 32), qui s'étendent dans la direction longitudinale du profilé isolant (10 ; 30), où le premier élément fonctionnel (22 ; 32) est lié de manière cohésive dans un domaine de contact avec la bande isolante (12),
où, dans une première étape, le corps profilé (14) et le premier élément fonctionnel (22 ; 32) sont chacun fabriqués et mis à disposition séparément, **caractérisé en ce que**
dans une deuxième étape ultérieure le corps profilé (14) et le premier élément fonctionnel (22 ; 32) sont envoyés dans la direction longitudinale de la bande isolante (12) qui doit être formée à un dispositif de soudage par ultrasons (200) dans lequel le corps profilé (14) et l'élément fonctionnel (22 ; 32) sont liés l'un à l'autre de manière cohésive en formant une liaison soudée, où le dispositif de soudage par ultrasons (200) comprend une zone de soudage équipée d'une sonotrode (204), où la sonotrode (204) présente un évidement dans lequel l'élément fonctionnel (22 ; 32) est guidé pendant la formation de la liaison soudée,
et **en ce que** le corps profilé (14) et l'élément fonctionnel (22 ; 32) sont réunis pendant la formation de la liaison soudée en une première géométrie en section transversale prédéterminée, vue perpendiculairement à la direction longitudinale, puis guidés dans la première géométrie en section transversale prédéterminée ou, éventuellement, dans une deuxième géométrie en section transversale prédéterminée qui s'écarte de la première géométrie en section transversale, vue perpendiculairement à la direction longitudinale, jusqu'à ce que le matériau synthétique de la liaison soudée se soit solidifié à un point tel que le corps profilé (14) et le premier élément fonctionnel (22 ; 32) sont fixés dans la géométrie en section transversale prédéterminée.

2. Procédé selon la revendication 1, où le corps profilé (14) et le premier élément fonctionnel (22 ; 32) sont envoyés au dispositif de soudage par ultrasons en continu ou de manière intermittente ; et/ou
où le corps profilé (14) et/ou le premier élément fonctionnel (22 ; 32) sont mis à disposition sous forme de matériau continu ou de produit en barre.

3. Procédé selon la revendication 1 ou 2, où le corps profilé (14) et l'élément fonctionnel (22 ; 32), avant de traverser la zone de soudage, sont positionnés l'un par rapport à l'autre dans une position relative prédéterminée, éventuellement variable, et sont guidés dans la direction longitudinale au moyen d'un premier dispositif de guidage ; et/ou
où le corps profilé (14) et l'élément fonctionnel (22 ; 32), après avoir traversé la zone de soudage, sont positionnés l'un par rapport à l'autre dans une position relative prédéterminée, éventuellement variable et sont guidés dans la direction longitudinale au moyen d'un deuxième dispositif de guidage ; et/ou
où le corps profilé (14) et l'élément fonctionnel (22 ; 32) sont pressés l'un contre l'autre avec une force prédéterminée lors du passage à travers la zone de soudage et lors du passage à travers un deuxième dispositif de guidage optionnel suivant la zone de soudage.

4. Procédé selon l'une des revendications 1 à 3, où le premier élément fonctionnel (32) est formé avec un ou plusieurs éléments de fusion (36) qui s'étendent sous forme de saillie depuis une surface du domaine de contact du premier élément fonctionnel (32), où la ou les saillies s'étendent de préférence à environ 3 mm ou moins, de préférence encore environ 1,5 mm ou moins de la surface.

5. Procédé selon l'une des revendications 1 à 4, où le corps profilé (14) et le premier élément fonctionnel (22 ; 32) sont envoyés l'un l'autre sous un angle aigu par rapport à la direction longitudinale, où le guidage s'étend sous un angle aigu au moins sur des domaines partiels de la zone de soudage et éventuellement du premier dispositif de guidage et/ou du deuxième dispositif de guidage.

6. Procédé selon l'une des revendications 1 à 5, où le soudage par ultrasons est réalisé sous forme de soudage en champ proche, où la sonotrode présente un contact direct avec le premier élément fonctionnel et où de préférence la sonotrode est disposée avec une distance maximale d'environ 6 mm ou moins au corps profilé ; et/ou
où la zone de soudage présente une longueur d'environ 5 cm à environ 50 cm et présente éventuellement plus d'une sonotrode ; et/ou
où, dans la zone de soudage, la ou les sonotrodes prennent des positions angulaires différentes par rapport à la direction longitudinale du corps profilé (14), où les positions angulaires varient de manière continue et/ou par paliers et ainsi la distance entre la ou les sonotrodes et la surface de la bande isolante est réduite dans la direction du passage ; et/ou
où la zone de soudage comprend au moins une sonotrode statique, où la sonotrode statique est conçue en particulier comme une sonotrode de meulage.

7. Procédé selon l'une des revendications 1 à 6, où le premier élément fonctionnel (22 ; 32) est formé dans le domaine de contact avec un épaulement qui est en contact avec la ou les sonotrodes dans le domaine de la zone de soudage.

8. Procédé selon l'une des revendications 1 à 7, où le profilé isolant (10 ; 30) est transporté dans la direction longitudinale dans la zone de soudage à une vitesse d'environ 5 m/min ou plus, de préférence d'environ 10 m/min ou plus ; et/ou
où le temps de séjour du corps profilé (14) et du premier élément fonctionnel (22 ; 32) dans le zone de soudage est d'environ 100 à environ 1000 ms, de préférence d'environ 200 à environ 800 ms ;
où la sonotrode (204) est amenée à fonctionner en continu.

9. Procédé selon la revendication 7 ou 8, où la sonotrode (204) est conçue avec un évidement en forme de rainure ou de fente, de telle sorte que deux domaines d'extrémité disposés parallèlement de la sonotrode (204) sont formés, qui sont en contact avec le domaine de contact du premier élément fonctionnel (22 ; 32) lors de la formation de la liaison soudée.

10. Procédé selon l'une des revendications 1 à 9, où l'élément fonctionnel (22 ; 32) est formé au niveau du domaine de contact à relier au corps profilé (14) avec une ou plusieurs saillies en forme de d'éléments orienteurs d'énergie, où la saillie ou les saillies est/sont conçues en particulier comme un ou des éléments de fusion ; et
où en particulier l'élément fonctionnel est pourvu au voisinage de la saillie ou des saillies d'un ou plusieurs éléments d'arrêt qui définissent la géométrie en section transversale à réaliser lorsque l'élément fonctionnel et le corps profilé sont réunis, où la ou les saillies sont conçues de préférence également avec la fonction d'épaulement.

11. Procédé selon l'une des revendications 1 à 10, **caractérisé en ce que** la liaison cohésive entre le ou les premiers éléments fonctionnels (22 ; 32) et le corps profilé (14) a lieu de manière continue, par sections ou de manière ponctuelle le long de la direction longitudinale du profilé isolant ; et/ou
où, en plus du corps profilé (14), les éléments fonctionnels (22 ; 32) sont également mis à disposition sous forme de matériau continu et, après la formation de la liaison cohésive de ceux-ci, le profilé isolant est coupé à une longueur prédéterminée, de préférence par un processus de découpe, poinçonnage ou fraisage ; et
où en particulier les matériaux continus sont mis à disposition sur des rouleaux, des bobines ou des tourniquets,
où éventuellement le corps profilé (14) et/ou les éléments fonctionnels (22 ; 32) sont mis à disposition sous la forme de produits en barres avant la formation de la liaison cohésive.

12. Profilé isolant (10 ; 30), fabriqué par un procédé selon l'une des revendications 1 à 11, où le corps profilé (14) présente un domaine s'étendant dans la direction longitudinale du profilé isolant (10 ; 30) qui est sensiblement plan.

13. Profilé isolant (10 ; 30) selon la revendication 12, où le corps profilé (14) présente des ouvertures traversantes à intervalles prédéterminés, en particulier réguliers ; et/ou
où la bande isolante (12) est formée avec au moins une section de bord (20) qui comprend un élément de liaison, où l'élément de liaison présente en particulier la forme d'une tête d'enroulement pour la liaison à des profilés métalliques.

14. Profilé isolant (10 ; 30) selon la revendication 12 ou 13, où la liaison soudée cohésive entre le corps profilé (14) et le premier élément fonctionnel (22 ; 32) présente une résistance d'environ 2 N/mm ou plus, de préférence d'environ de 5 N/mm ou plus, de manière particulièrement préférée d'environ 10 N/mm ou plus ; et/ou
où la bande isolante comprend des deuxièmes et éventuellement d'autres éléments fonctionnels formés d'un seul tenant avec le corps profilé ; et/ou
où le ou les premiers éléments fonctionnels (22 ; 32) est/sont choisis parmi les éléments de surface plans, courbés, en particulier partiellement circulaires, ramifiés ou coudés en section transversale et/ou les éléments entourant une ou plusieurs cavités, où le ou les éléments fonctionnels présentent de préférence une section en forme de T, en forme de flèche ou en forme de crochet en section transversale à la direction longitudinale.

15. Profilé isolant (10 ; 30 ; 150) selon l'une des revendications 12 à 14, où le ou les premiers éléments fonctionnels forment une pluralité de cavités, qui sont éventuellement fermées, dans la direction longitudinale du profilé isolant, où les cavités sont formées en particulier en rangée côte à côte ; et/ou
où le corps profilé (14) et le ou les premiers éléments fonctionnels (22 ; 32) sont fabriqués en un matériau polymère soudable, qui est de préférence à base d'un polymère thermoplastique, qui est choisi parmi les polyamides, les polyesters, les polyoléfines, les polycétones, les polymères vinyliques, le polyéther, le polycarbonate, le polyphénylènesulfure et leurs copolymères ou les mélanges de ces matériaux ;
où éventuellement le matériau polymère du ou des premiers éléments fonctionnels (22 ; 32) est choisi de telle sorte qu'il est compatible avec le matériau polymère du corps profilé (14).

16. Profilé isolant (10 ; 30) selon l'une des revendications 12 à 15, où la surface et/ou un noyau du ou des premiers éléments fonctionnels est partiellement revêtue de métal ou métallisée ou équipée d'une finition métallique ; et/ou
où le matériau polymère du corps profilé (14) et/ou du premier élément fonctionnel (22 ; 32) est renforcé par des fibres, en particulier des fibres de verre.
